# EUROPEAN PATENT APPLICATION

(11) **EP 3 175 921 A1**
(43) Date of publication of application: **07.06.2017**
(21) Application number: 15382607.8
(22) Date of filing: 04.12.2015
(51) Int. Cl.: B01L 3/00, G01N 21/77

(54) **BIOPHOTONIC DEVICES AND METHODS OF THEIR USE**

(71) Applicant: Consejo Superior De Investigaciones Científicas, 28006 Madrid (ES); Centro Nacional de Investigaciones Cardiovasculares (CNIC), 28029 Madrid (ES); Aarhus University, 8000 Aarhus C (DK)
(72) Inventor: Ackermann, Tobias Nils, 08193 Cerdanyola, Barcelona (ES); Muñoz Berbel, Xavier, 08193 Cerdanyola, Barcelona (ES); Llobera Adan, Andreu, 08193 Cerdanyola, Barcelona (ES); Rodríguez-Ruiz, Isaac, 08193 Cerdanyola, Barcelona (ES); Álvarez Conde, Erica, 08193 Cerdanyola, Barcelona (ES); Andrés García, Vicente, 28029 MADRID (ES); Dorado de la Corte, Beatriz Julia, 28029 MADRID (ES); Rius Leiva, Cristina, 28029 MADRID (ES); Simonsen, Ulf, 8000 Aarhus C (DK); Røge Hedegaard, Elise, 8000 Aarhus C (DK); Schou Knudsen, Heidi, 8000 Aarhus C (DK)
(74) Representative: Pons

(57) **Abstract**

Methods for measurement of the optical properties of biological cells are disclosed, in particular wherein light is coupled into and confined within a cell layer.

Particularly, in one aspect a device (10, 50, 100, 200, 300, 400, 410, 500) to measure an optical characteristic of a plurality of cells (22) on a surface (34) is described. Additionally, an apparatus that comprises said device (10, 50, 100, 200, 300, 400, 410, 500) to measure an optical characteristic of a plurality of cells (22) on a surface (34) is provided. In a second aspect a method of measuring an optical characteristic of a plurality of cells (22) is described. Additionally, an in vitro method of diagnosing and/or prognosis of a medical condition of a sample comprising a plurality of cells (22) obtained from a patient is provided.

## Description

### OBJECT OF THE INVENTION

The present invention relates to devices and methods for measurement of the optical properties of biological cells, in particular wherein light is coupled into and confined within a cell layer.

### BACKGROUND OF THE INVENTION

Vascular endothelial cells make up the endothelium that lines all blood vessels in the body, and control to a large extent what compounds can cross over from the blood in the circulatory system into the tissue. The role of the endothelium extends beyond acting just as a barrier, and vascular endothelial cells are actively involved in many pathophysiologies. In some cases, endothelial cells directly determine the course of a disease. For instance, these cells control angiogenesis (the formation of new blood vessels) in cancerous tumours, thereby ensuring that cancer cells receive the necessary nutrients to proliferate. In other instances, the endothelium itself is damaged as a result of cardiovascular risk factors (e.g. hypertension, hypercholesterolemia, diabetes, smoking, and aging). Endothelial dysfunction is also associated with progression of ischemic heart disease, and is therefore of prognostic significance. In addition to endothelial cells, vascular smooth muscle cells and immune cells contribute significantly to regulate vascular function and play a significant role in atherosclerosis and inflammation.

Several potential biomarkers have attracted attention because of their ability to predict future cardiovascular events. These include markers for inflammation (e.g. C-reactive protein, interleukin-6, and lipoprotein-associated phospholipase A2) and for endothelial dysfunction (e.g. homocysteine, urinary albumin, methylated arginins, and circulating adhesion molecules, matrix metalloproteinase-9, and plasminogen activator inhibitor-1). The serum concentrations of these compounds measured by various immunoassay techniques vary widely, from millimole/litre for homocysteine to several hundred nanomole/litre for albumin, less than 100 nanomole/litre for C-reactive protein, and tens of nanomole/litre down to hundreds of picomole/litre for circulating adhesion molecules. However, due to low specificity and predictive value, these biomarkers only add moderately to the ability of classical vascular risk factors to predict future cardiovascular events in an individual patient. Infusion of acetylcholine or use of ultrasound to measure blood flow in the brachial artery after induced ischaemia have revealed that impairment of endothelium-dependent vasodilatation is related to the occurrence of cardiovascular events, but there is low predictive value of these measurements in individual patients.

Recent studies have suggested that endothelial progenitor cells can be used as a measure of endothelial function in patients with risk for cardiovascular disease, but so far mainly cell numbers are evaluated (Kunz et al., American Heart Journal, 2006 152(1), 190-195). Hitherto, the accepted hypothesis is that when a cell culture changes from healthy to non-healthy, there is a concomitant change either in cell morphology and/or size, as well as an over- or under-expression of proteins, which finally results in an alteration of cellular function and cellular intrinsic properties, as it is the case for optical properties. In this context, the multiparametric analysis of the optical properties (also called the analysis of the 'fingerprint') of endothelial cells may provide information on cardiovascular health status and hence, important clues for the prevention and treatment of cardiovascular disease (Sen S et al. Clin Sci (Lond) (2011) 120(7) 263-83). Examination of endothelial cell properties and relation to cardiovascular risk factors is an active research field (see e.g. Østergaard L. et al., Am. J. Physiol. Heart Circ. Physiol. 293(5), (2007) 2894-2903). In addition, early studies have suggested that endothelial dysfunction is therapeutically reversible (Simonsen U. et al., Pharmacological Reports 61, (2009) 105-115), and that this therapy can prevent the development of ischaemic heart disease.

Currently, it is known that biophotonics has several unique properties, such as extremely high sensitivity, inherent non-destructive measurement and minimal invasiveness while being able to maintain sterility, and is therefore optimal for obtaining the multiparametric optical characteristics or 'photonic fingerprint' (PIN) of a given cell population.

Biophotonics is a mature, multidisciplinary research field that allows contactless real-time diagnosis and screening in the life sciences and medicine. This enables understanding bio-chemical, metabolic and disease progression at the cellular level. Biophotonics has several unique properties, such as the extremely high sensitivity, the inherent non-destructive measurement or the small (or not) invasiveness while holding sterility conditions. Hitherto, however, most of the biophotonic systems still require expensive, bench-top experimental setups to perform highly-specific, yet uniparametric measurement. Nevertheless, the accepted hypothesis is that when a cell culture changes from healthy to non-healthy, there is a concomitant change either in cell morphology and/or size, as well as an over(under)expression of proteins, which finally results in a modification of their optical properties. If these changes were simultaneously detected (multiparametric optical characteristics or 'photonic fingerprint' ,PIN), the analytical diagnosis or the effect of a given drug will have higher specificity, being then much more accurate. To this effect, low cost, miniaturized, label-free, multiparametric and quantitative biophotonic systems are envisaged as the next generation of analytical systems to develop new paths for early/improved detection and/or drug screening, among others.

### DESCRIPTION OF THE INVENTION

It is an object of the present invention to provide improved biophotonic devices and methods for the optical interrogation of living cells, including means to measure and interpret the PIN of cells such as endothelial cells in response to potential or actual disease conditions or exposure to compounds such as potential cytotoxins or drug compounds.

Throughout the description and claims the words "cells", "plurality of cells" and "cell layer" refers to a cell culture comprised by cells and liquid medium.

Particularly, the cells may be endothelial, vascular smooth muscle or epithelial cells, macrophages, or other types of cells. In some embodiments, those cells are present in a multilayer cell assembly such as a colony, a tissue sample, or a superconfluent cell culture. Additionally, the cells may be derived from tumour biopsies or other type of tissue samples from human, primate, or murine origin, although other mammalian sources are also possible.

According to a first aspect the invention provides a device to measure an optical characteristic of a plurality of cells on a surface, comprising:
a chamber having a wall comprising a low refractive index (RI) material, wherein the low RI is in the range 1.01 to 1.345, the wall having a surface comprising a cell receiving region overlying the low RI material, the cell receiving region comprising a cell receiving surface adapted to permit adhesion of cells,
a light emitter at a first position adjacent to the cell receiving region, and a light collector at a second position adjacent to the cell receiving region such that the cell receiving region is comprised between the first and second positions, the light collector being configured to receive light travelling in a direction substantially parallel to the said surface.

Preferentially the light emitter is configured to couple light into the said plurality of cells and the light collector is configured to receive light that is guided within the plurality of cells in part of an optical path from the light emitter to the light collector.

In this way, light may be coupled into the cell layer from the light emitter, provided at the first position, and is collected by the light collector at a second position, the cells being provided in the cell receiving region on the surface between the first and the second positions. Light travelling from the light emitter towards the light collector travels substantially parallel to the surface on which the cells are adhered, such that the overall direction of travel is parallel to the surface, while individual light pathways within the device are guided within the cell layer through total internal reflection at the interfaces between the cells and the medium and the cells and the surface of the low RI material underlying the cell receiving region. It will be understood that at any instant such light pathways are not necessarily directed parallel to the surface; however the overall direction of propagation guided by the cell layer towards to collector is substantially parallel to the surface.

The RI of the low RI material may be selected such that light is guided within the cell layer by total internal reflection at the interface of the low RI material adjacent to the cell layer, the said interface being with the cell layer itself or with a layer that overlies the low RI material Accordingly, the RI may be selected to be lower than the average RI of the type of cells for which the device is adapted. Specifically, the device may be adapted to be used with mammalian cells, which have an average RI through the layer of 1.334. Accordingly, the RI of the low RI material may be in the range from 1.01 to 1.3345, or in the range from 1.10 to below 1.334 such as 1.333, or the range from 1.20 to 1.330. The device may be adapted to be used with bacteria adherent on the surface, for example as part of a biofilm, which may have an average RI of 1.340. Accordingly the RI of the low RI material may be selected to be in the range from 1.01 to 1.345, or in the range from 1.10 to below 1.340 such as 1.339, or in the range from 1.20 to 1.335.

Therefore, the low RI material may have a RI in the ranges 1.01 to 1.10, 1.05 to 1.15, 1.10 to 1.20, 1.15 to 1.25, 1.20 to 1.30, 1.25 to 1.345 or 1.10 to 1.339.

In some embodiments the light collector comprises an optical cross-section through which light passes from the chamber into the light collector, the optical cross-section being positioned relative to the cell receiving surface of the cell receiving region such that the projection of the said surface in the direction of the light collector intersects the optical cross-section of the light collector.

For example, in some embodiments the device has an orientation in which the cell receiving surface is at the base of the chamber and the lowest point of the said optical cross-section of the light collector is below the level of the cell receiving surface.

In some embodiments the device comprises a plurality of cells in the form of a layer on the cell-receiving surface, optionally a layer that is wholly or partially confluent.

In some embodiments, the optical cross-section of the light collector is positioned relative to the surface of the cell receiving region such that the projection of the said surface towards the light collector intersects the optical cross-section of the light collector.

In some embodiments, the light emitter comprises an optical cross-section through which light passes into the chamber and wherein the optical cross-section is positioned relative to the cell receiving surface of the cell receiving region such that the projection of the said surface towards the light emitter intersects the optical cross-section of the light emitter.

The low RI material of the invention may be organic, inorganic or polymeric. Layered materials exhibiting a low IR are also included in this definition; each layer can be formed by the same or different material. Preferably, the low RI material may be selected from nanoporous silica, a nanoporous metal oxide, a porous polymer such as porous PDMS or a combination thereof.

A nanoporous silica material suitable for use in the invention may be formed by methods as known in the art, such as:
sol-gel methods, for example by heat treatment of an organosilicon compound such as, but not limited to, tetra-ethyl orthosilicate (TEOS) or analogues thereof, optionally in a mixture of two or more organosilicon compounds and optionally containing a surfactant such as Triton X-100. An example of such a method is described herein;
oxidation of a porous silicon layer;
heat treatment of a multiphase material comprising nanoparticles or an emulsion phase to remove the nanoparticles or emulsion phase and to sinter the remaining material;
chemical vapour deposition or plasma deposition of porous silicon oxide.

A low refractive index solid polymer may be selected from an optically curable low RI resin as supplied by MY Polymer Inc., (Nes Ziona, Israel), or a cellulose polymer, such as bacterial cellulose (Bottan et al., ACSNano 9(1) 2015 209-216).

The cell receiving surface may be adapted to permit adhesion of cells and may be adapted to facilitate growth of cells adherent on the surface to form a layer comprising an area of cells in contact, such as a confluent layer. The cell receiving surface may comprise a material known to permit cellular adhesion, and may comprise the low RI material itself. The cell receiving surface may comprise nanoporous silica. The cell receiving surface may comprise a layer or coating of a material to permit cell adhesion, overlying the low RI material, for example a biopolymer such as fibronectin, collagen, laminin; an inorganic material such as silicon dioxide, a polymer such as polystyrene or polycarbonate, or a surface coating of a polymer such as parylene (Chang et al. Langmuir. 2007 Nov 6;23(23):11718-25). The layer or coating may comprise a modified surface such as a species adherent on the surface to enhance cell adhesion such as RGD peptides, or a plasma-treated surface to control the chemical properties of the surface to permit cell adhesion (Chang et al. 2007 and references therein). In this way, in use cells are permitted to adhere to the cell receiving surface of the cell receiving region, such that light from the emitter adjacent to the cell receiving region may pass through the cells and be received by the light collector. The cells may be cultured on the cell receiving surface and the surface may be adapted to facilitate such cell culture by being fabricated to have characteristics typical of cell culture surfaces as known in the art.

The device may comprise a layer of cells adherent on the cell receiving region, wherein the layer is substantially confluent in at least a portion of the cell receiving region. The cells may be selected according to a method of use of the device, and are not limited to specific types of cells. Cell types suitable for use as part of the device will be listed below. In some embodiments the device comprises a layer of cells grown to confluence on the cell receiving region.

In this way devices of the invention provide means to measure an optical characteristic of cells provided as a layer on a surface by means of waveguiding within the cell layer, wherein the cells are provided on the surface comprising the low RI material, the low RI being defined as the range around 1.01 to around 1.34, such that the RI is less than the RI of biological cells (typically around 1.335), and contacted with an aqueous liquid such as a buffer or cell culture media (herein referred to for brevity as 'liquid'), the liquid typically having at RI in the range 1.320 to 1.330, hence being lower than that of the cells in the layer. This leads to light travelling in a confined manner within the cell layer, in which light entering from the left is confined within the cell layer by total internal reflection at the interfaces with the medium above the cell layer and low RI material below. Changes in cell morphology and degree of contact with neighbouring cells will be measurable through changes in the spectrum of light guided through the cell layer.

The chamber may be formed within a body of the device. The chamber is typically configured to retain the liquid that is in contact with the cell receiving surface. The device may comprise a port in fluid communication with the chamber to allow liquid to be introduced into the chamber. The chamber may be in the form of a well, the port being the open top of the well to allow liquid and cells to be introduced into the chamber preferably by pipetting. The device may comprise a first port connected to the chamber via a first fluidic channel and a second port connected to the chamber via a second fluidic channel, to allow the chamber to be filled by flowing a liquid from the first port. The second port may be a vent, or a breather passable to gas and not liquid. The chamber may be a fluidic channel connected to the first and second ports. The chamber and fluidic channels may be part of a network of fluidic channels to allow movement of one or more liquids into or through the chamber as known in the art of microfluidics.

The chamber may be rectilinear, such as having a rectilinear cross section in the direction of light travel from the light emitter to the light collector and/or a rectilinear cross-section orthogonal to that direction. The chamber may have a cylindrical cross section perpendicular to the direction of light travel, and may be tubular in the sense that its dimension in the direction of light travel from the light emitter to the light collector is greater than either orthogonal cross sectional dimension, and for example may comprise a cylindrical tube.

The chamber may have a length in the direction of the optical pathway in the range 0.05mm to 30mm, in the range 1 mm to 10mm, or in the range 1.5mm to 5mm. The device may be configured to provide an optical pathway between the light emitter and the light collector having a length in the said ranges. The cell receiving region of the device may have a length in the direction of the optical pathway in one of the said ranges. A typical embodiment of the device may have a cell receiving region in the range 1.0 to 5.0mm long.

In one preferred embodiment, the chamber may have a lateral cross-sectional dimension perpendicular to the light pathway in the range around 0.05mm to around 5mm, in the range 0.1mm to 2mm, or in the range 0.1mm to 0.5mm, or in the range 0.5 to 0.01 times the length of the chamber. A typical such dimension is in the range 50um to 300um. The cell receiving region may have a lateral dimension perpendicular to its length in the range around 0.05mm to around 5mm, in the range 0.1mm to 2mm, or in the range 0.1mm to 0.5mm, or in the range 0.5 to 0.01 times the length of the cell receiving region. A typical such dimension is in the range 100um to 400um, such as 200um.

The chamber may have a vertical cross-sectional dimension perpendicular to the light pathway in the range 0.05mm to 5mm, in the range 0.1 mm to 2mm, or in the range 0.1 mm to 0.5mm, or in the range 0.5 to 0.01 times the length of the chamber. In the case that the device comprises the chamber and the fluidic channels to introduce liquid into the chamber, a typical such dimension is in the range 50um to 300um, such as 140um.

The wall of the chamber comprising the cell receiving region may be planar. The cell receiving region may be planar while the wall adjacent to the cell receiving region may be non-planar, for example being recessed below the cell receiving region.

In some embodiments, the body of the device may comprise a substrate and a cover, the chamber being defined by a recess in the substrate, a recess in the cover or both. For example, features of the device may be formed on or within the substrate, and the chamber may be closed by the cover, as known in the art of microfluidics and opto-fluidic devices. In some embodiments the substrate may define the wall of the device on which the cell receiving region is provided, and the cover may define further walls of the chamber, optical components of the light collector and the light emitter, and fluidic channels connecting to the chamber. Examples of such structures will be described herein. In some embodiments the further walls of the chamber, optical components of the light collector and the light emitter, and fluidic channels connecting to the chamber may be defined within the surface of the substrate.

The cell receiving region on the surface of the wall is a region between the light emitter and the light collector and may be adapted to allow adhesion by cells, for example having a surface adapted to allow adhesion and proliferation of cells. The surface may comprise a material as known in the art to allow cell adhesion, and may comprise a coating of such a material. Examples of such materials are given herein.

The device may have be oriented in use such that the cell receiving region forms part of the base of the chamber, such that cells may sediment onto the surface of the cell receiving region. The device may be adapted to facilitate this orientation, for example having a substantially planar configuration in which the wall of the chamber comprising the cell receiving region forms the base of the chamber.

The wall comprising the low RI material may have a surface formed by the said material, such that in use the cells are provided directly on the low RI material. Alternatively the wall may comprise an overlayer of a further material that on top of the low RI material, that overlayer being in the range 10 nm up to 100 nm thick, such that the overlayer is thin enough that propagation of light by waveguiding within it is acceptably low compared with propagation of light by waveguiding within the cell layer. In this way the cell receiving region is on the surface of the wall of the chamber overlying the low RI material, and the low RI is effective in resulting in waveguiding within the cell layer; while light may leak into the intervening layer from the cell layer, light will not propagate within the intervening layer provided that layer is sufficiently thin, such as up to 100nm thick.

Specifically, the light collector is an element of the device that couples light from the chamber travelling substantially parallel to the cell receiving surface, guided in use by a cell layer on the surface, to an instrument such as a spectrophotometer. The instrument may be coupled to the light collector by an optical fibre.

More specifically, the light emitter is an element of the device that couples light from a light source into the chamber in such a way that the light may enter and be guided within a layer of cells on the cell receiving surface in the device. The light source may be external to the device and may be coupled to the light emitter via an optical fibre, or may be mounted on a common substrate together with the features of the device described herein.

In a preferred embodiment the device according to the invention may comprise a multi-wavelength light source coupled to the light emitter and a multi-wavelength detector, optionally a spectrophotometer, coupled to the light collector. The multi-wavelength source may be a polarised or a non-polarised source (including but not restricted to a halogen lamp, a laser, a LED) and the multi-wavelength detector may comprise a polarimeter, a monochromator and/or a photodiode.

The light emitter or the light collector may comprise one or more of a transparent window into the chamber; the waveguide formed on the device; an optical fibre passing into the chamber; a lens or group of lenses; a mirror element or a group of mirror elements; a diffraction grating.

The transparent window may be in a sidewall of the device adjoining the cell receiving region. The sidewall may be substantially perpendicular to the cell receiving surface. The sidewall may comprise a region of a transparent material; for example the chamber may be formed within a transparent material. The window may be an optical element formed separately from the sidewall and inserted into it.

In some embodiments, the light emitter or the light collector may comprise the tip of an optical fibre mounted on the device, for example in a positioning channel (herein referred to also as an alignment channel).

In other embodiments, the light emitter or the light collector may comprise the tip of a waveguide formed on the device. A waveguide may be formed using a solid polymer within a receiving structure in the surface, such as a microfluidic channel into which the solid polymer may be introduced in liquid form and then solidified, for example polymerised in-situ. The waveguide may be formed on the surface of a substrate by microfabrication as known in the art, and the chamber may be formed adjacent to or around the waveguide so that the light emitter or collector is adjacent to the cell receiving surface. Light may be coupled into a emitter waveguide or out from a collector waveguide via the optical fibre mounted on the device, for example in an alignment channel to align the fibre with the waveguide.

The waveguide may be tapered such that a dimension of the tip forming the light emitter or the light collector is smaller than a cross-sectional dimension of the waveguide distal from the tip. This taper may provide a ratio of the distal cross-sectional dimension to that at the tip in the range 1:1 to 2:1, 1:1 to 5:1, 1:1 to 10:1, or from 1:1 to greater than 10:1.

The light emitter or the light collector may comprise a lens or group of lenses adjacent to the surface, such as an air lens formed in a material of a wall of the chamber adjacent to the surface.

In some embodiments, the light emitter or the light collector may comprise a mirror element or group of mirror elements provided at an angle to the surface, so as to direct incident light to reflect at an angle to the surface such that it may couple into or out from the cell layer in use. The light emitter mirror element may comprise a reflective surface at an angle to the cell receiving surface in the range 30 to 50 degrees, or in the range 40 to 47 degrees. Similarly, the light collector mirror element may comprise a reflective surface provided in the same range of angles to the cell receiving surface. In this way light may couple into the cell layer when incident from a light source oriented above or below the device, such as the optical fibre connected from above or below the device, and similarly in the case of the light collector may be collected via the optical fibre connected from above or below the device or by an instrument observing from above or below the device.

The emitter may comprise a diffraction grating formed in the wall of the device at the first position adjacent to the cell receiving region, such that light incident on the grating, for example from below the surface, may diffract from the grating to provide a beam at an angle to the surface such that it may couple into the cell layer. The collector may comprise a diffraction grating formed in the wall of the device at the second position adjacent to the cell receiving region, such that light propagating within the cell layer and incident on the grating may diffract from the grating to provide an output beam at an angle to the surface, for example below the surface, such that it may be collected by an observing instrument aligned with the direction of the output beam.

The optical cross-section of the light emitter or the light collector is the cross-section perpendicular to the direction of light travel adjacent to the cell receiving region through which light passes. For example in the case of the window, the fibre, the waveguide or lens the optical cross-section is the region of the window, fibre core or tip of the waveguide through which light passes. In the case of the mirror element the optical cross-section is the dimension of the mirror element parallel to the direction of light travel multiplied by the sine of the angle between the mirror element and the cell receiving surface.

The optical cross-section may be substantially circular, oval, rectangular, although other geometries are also feasible.

In some embodiments the optical cross-section of the light collector is larger than the maximum expected cross-sectional area of the cell layer perpendicular to the light path from the light emitter to the light collector. In this way the light collector is large enough to collect light guided within the cell layer at a range of total internal reflection angles, so providing efficient light collection. A dimension of the optical cross-section of the light collector may be in the range 4um to 105um in the case that the light collector comprises the optical fibre without micro-optics, as the fibre core is available in standard sizes in this range. For a device comprising micro-optics as part of the light collector the optical cross-section is determined by the dimensions of the micro-optical components. The light collector optical cross-section may have a height in the range 4um to 50um, in the range 10um to 30um, such as 20um, and a width that may be the same width as the width of the cell receiving region, such as in the range 4um to 300um, in the range 10um to 100um, such as 60um to 80um. The width to height aspect ratio of the light collector optical cross-section may be in the range 1 to 100.

In some embodiments the minimum dimension across the optical cross-section of the light emitter is smaller than the maximum expected cross-sectional area of the cell layer along the light path from the light emitter to the light collector. In this way the light emitter is configured to direct light from a small optical cross-section through the central part of the cell layer, so providing a concentrated light source whose rays will pass predominantly through the cell layer to the light collector, while reducing light travelling outside the cell layer. The light emitter optical cross-section may have a height perpendicular to the cell receiving surface in the range around 1 um to around 10um or in the range 2um to 5um, typically 2um, and a width may be around the width of the cell receiving region, such as in the 5um to 300um, in the range 10um to 100um, such as 60um to 80um. In this way the light may be emitted efficiently into the cell layer that may be a monolayer having a depth above the cell receiving surface in the range 1um to 5um. The width to height aspect ratio of the light emitter optical cross-section may be in the range 1 to 100.

In some embodiments the optical cross-section of the light collector is larger than that of the light emitter, such that the area of the optical cross-section of the light collector is greater than that of the light emitter or that a maximum dimension of the light collector optical cross-section orthogonal to the direction of light travel into the light collector is larger than a maximum dimension of the light emitter optical cross-section orthogonal to the direction of light travel from the light emitter.

The optical cross-section may be aligned with the surface of the cell receiving region adjacent to the light collector such that the projection of the said surface in the direction of the light collector intersects the optical cross-section. The projection is a virtual extension of the surface of the cell receiving region in the direction of the light collector, and intersects with the optical cross-section if part of the projected surface crosses the area of the optical cross-section. The cell receiving region may be planar and the projection then intersects the optical cross-section at a straight line. The cell receiving region may be cylindrical or part of a cylinder and the projection then intersects the optical cross-section at an arc or a circle. The whole, or part of the width of the cell receiving region may be aligned with the optical cross-section, such that the projection is contained within the optical cross-section, or the alignment may be such that the projection overlaps the optical cross-section and only a part of the projection intersects the optical cross-section.

In this way light passing through the optical cross-section may be received from substantially the whole depth of the cell layer on the surface. In some embodiments the optical cross-section has an optical axis at the centre of the optical cross-section and the axis aligns with a line in the cell receiving surface. In this way the cell receiving surface is aligned with the centre of the optical cross-section and so light guided within the cell layer has a high chance of entering the optical cross-section.

The device may be oriented such that the cell receiving region is towards the bottom of, or forms part of the base of, the chamber. The optical cross-section may then be aligned with the cell receiving surface such that the cell receiving surface is at a vertical level above the lowest part of the optical cross-section but below its highest part. In some embodiments the light collector comprises an optical fibre, the optical cross-section is the tip of the core, and the fibre is located in an alignment channel such that the tip of the core is at a vertical and horizontal alignment such that the cell receiving surface is above the lowest part of the core, or at the height of the axis of the core. Similarly, if the light collector is a waveguide the tip of the waveguide may be aligned such that the level of the cell receiving surface is above the lowest part of the tip. If the light collector comprises the window, the lens or group of lenses, the mirror element or group of mirror elements, the said light collector may be aligned such that the level of the cell receiving surface is above the lowest part of the optical cross-section of the said window, lens or group of lenses, mirror element or group of mirror elements.

Similarly, the light emitter may be located at a height as described above to provide effective light coupling into a cell layer on the cell receiving region in use.

In some embodiments the device comprises a step profile on each side of the cell receiving region extending along the light path from the light emitter to the light collector to define the cell receiving region as a raised region of the wall between the two step profiles. The cell receiving region may be provided as a platform raised above the neighbouring areas of the wall of the device, the step profile forming the sides of the platform. The step profile may have an angle to the cell receiving region, such as substantially 90 degrees, or may be undercut, or may slope at an angle, for example in the range 90 degrees to 45 degrees. In this way light that is not guided within the cell layer escapes the layer as it travels in the direction from the light emitter to the light collector and is not guided within or reflected by neighbouring regions of the device so as to reach the light collector, so reducing background scattered light intensity at the light collector.

This raised platform may be provided as part of a substrate forming part of the device, for example by etching or otherwise removing part of the substrate on both sides of the platform, or by providing an added layer of material deposited on the surface of the substrate to form the platform, the layer being removed in whole or part on both sides of the platform. The raised platform, for example formed from the added layer, may comprise a material that is absorbent or that is transparent at the working wavelengths.

The step profile may have a scattering surface on each side of the cell receiving region selected from a roughened surface, a variable geometry diffraction grating, a random or semi-random diffraction grating or a randomly or semi-randomly oriented mirrors. In this way the scattering surface prevents any 'sweet spot' light rays from reaching the light collector through adventitious reflection or refraction from parts of the device and ensures that the intensity of any background light reaching the light collector is uniform and low.

Neighbouring regions of the device, such as the sidewalls of the chamber, may comprise a roughened surface, a variable geometry diffraction grating, a random or semi-random diffraction grating or a randomly or semi-randomly oriented mirrors that in use will act in the same way to reduce or prevent reflection or scattering of light back into the cell layer or into the light collector.

In some embodiments the width of the cell receiving region perpendicular to the light pathway from the light emitter to the light collector increases along the pathway from the light emitter. For example the cell receiving region may broaden in the direction of light travel so as to increase the efficiency of light interaction with the cell layer as the rays disperse from the optical cross-section of the light emitter. The light collector may have a wider optical cross-section than the light emitter as described herein, to capture light from the wider end of the cell receiving region. In the case that the cell receiving region is a platform within a device as described above, the step profiles may be formed such that they diverge along the direction of light travel to form such a broadening platform.

In some embodiments the device is configured such that the optical pathway from the light emitter to the light collector through the chamber is curved. The cell receiving region within the chamber may be curved, and the features of the device such as the step profiles to either side of the cell receiving region in some embodiments may be curved to conform to the curvature of the cell receiving region. In this way light that is guided within the cell layer reaches the light collector, while non-guided light is impeded from reaching the light collector. The cell receiving surface may have a reverse curve between the position of the light emitter and the position of the light collector, such that the axes of the fibre or waveguide coupling light to the light emitter and from the light collector are offset from one another, so that non-guided light from the light emitter does not reach the light collector. It will be understood that other patterns of curvature of the optical path between the light emitter and the light collector, and of the cell receiving region and surrounding step profile features providing it, are within scope of the invention. For example, the axes of the fibres or alignment channels may be at an angle one to another; the cell receiving region may have one or more radii and centres of curvature.

The device may form part of an apparatus configured to (i) measure the optical characteristics of a plurality of cells in a first physiological state, (ii) measure the optical characteristics of a plurality of cells in a second physiological state and (iii) to compare the optical characteristics to derive information on the first and/or second physiological states.

The apparatus may be configured to measure the response of cells in the device in a first physiological state to a compound in liquid contacting the cells, the apparatus being configured to measure a baseline optical characteristic of the cells in a second physiological state without the compound present, to measure a test optical characteristic of the cells with the compound present, and to compare the test optical characteristic with the baseline optical characteristic to derive cell response data. The apparatus may comprise liquid actuation means such as pipetting apparatus or flow actuation means to introduce a baseline liquid such as buffer or culture media into the chamber, then to introduce a liquid comprising the compound.

The apparatus may comprise computer implemented analysis means configured to:
receive optical data from a detector coupled to the light collector, and
compare the optical data with reference optical data to determine a characteristic of the cells in the device.

The characteristic may be cell response data for the response of the cells to a compound in a liquid contacting the cells. The cell response data may be selected from the group consisting of data relating to: metabolism, cell signalling, cell viability, cohesion or confluence of the cell layer, gap junctions between the cells, adhesion of the cells to the surface or to other cells, cell receptor action or expression. In this way the device is configured to carry out tests such as to determine toxic effects of the compound, diagnostic tests on a sample drawn from a patient, drug test to evaluate the effect of a certain drug on e.g. endothelial dysfunction, drug effect on cells from a specific patient.

According to a second aspect, the invention provides a method of measuring an optical characteristic of a plurality of cells comprising:
providing the plurality of cells arranged as a layer on a surface comprising a low refractive index (RI) material, the RI being in the range 1.01 to 1.345,
providing a liquid medium in contact with the cells,
coupling light from a light emitter into the cell layer at a first position, collecting light travelling from the light emitter and guided within the layer of cells at a light collector at a second position, and
measuring the optical characteristic of the light received by the light collector.

The low RI material, light emitter and light collector may be as described herein.

According to the embodiment, the low RI material may have a RI in the ranges 1.01 to 1.10, 1.05 to 1.15, 1.10 to 1.20, 1.15 to 1.25, 1.20 to 1.30, 1.25 to 1.34 or around 1.10 to around 1.339.

In some embodiments, the invention provides a method of measuring the optical characteristic of the plurality of cells comprising:
providing a device as described herein comprising a cell receiving region,
providing the plurality of cells arranged as a layer in the cell receiving region,
providing the liquid medium in contact with the cells,
passing light along an optical path from the light emitter through the cell receiving region to the light collector and
measuring the optical characteristic of the light received by the light collector,
wherein light is guided within the layer of cells in part of the said optical path.

The characteristic may be selected from: absorbance at one or more frequencies such as an absorption spectrum; polarisation; scattering, raman, a fluorescence at one or more frequencies such as a fluorescence spectrum; a measurement made by any further optical spectroscopic method or a combination of any of the previously mentioned spectroscopies.

The method may comprise introducing culturing cells on the surface of the cell receiving region of the device such that they form an adherent layer, optionally a confluent layer.

The device may be oriented such that the said surface forms part of the base of the chamber. In this way cells may be seeded onto the surface of the cell receiving region by sedimentation from a liquid suspension, allowed to adhere and then cultured. The cells may be grown such that they are substantially in contact with further cells to form a partially or wholly confluent layer.

In some embodiments the invention provides a method of measuring a physiological characteristic of a sample of cells comprising:
measuring the optical characteristic of the sample of cells using a method as described herein,
comparing the optical characteristic with a reference optical characteristic indicative of the physiological characteristic, and
using the comparison to determine the physiological characteristic of the cells.

In some embodiments, the invention provides a method of measuring the response of cells in the device to a compound in a liquid contacting the cells, comprising contacting the cells with a liquid medium comprising the compound and then measuring an optical characteristic of the cells in contact with the compound.

The method may comprise measuring a baseline optical characteristic of the cells without the compound present, and comparing the measured optical characteristic in the presence of the compound with the baseline optical characteristic to measure a change in a physiological characteristic of the cells.

According to the embodiment, the physiological characteristic may be an optical characteristic typically measured as part of a test selected from a toxicology test on the compound, a diagnostic test on a sample drawn from a patient to whom the compound has been administered, or a test for a drug effect of the compound on the cells.

According to a third aspect the invention provides an in vitro method for the diagnosis and/or the prognosis of a medical condition of a sample comprising a plurality of cells obtained from a patient comprising:
measuring the optical characteristic of the plurality of cells according to the method of the second aspect of the invention,
comparing the optical characteristic of the said plurality of cells with calibration data, and
identifying said patient as having a medical condition when the optical characteristics are significantly different from the optical characteristics of the calibration data.

The calibration data may be data relating the optical characteristic of cells of the type under test to known disease conditions. Such data may be stored in a data store and the measured optical characteristic or data derived from it may be compared with the calibration data to determine the patient data. The calibration data may be data derived from measurements of an optical characteristic made on cells from a sample set of patients with known disease conditions.

The calibration data may comprise an optical characteristic or data derived from it, from measurements on cells from, or derived from, the said patient at a previous time. In this way the method provides a means to determine a change in the optical characteristic of the cell population over time. This may indicate for example a progression or an alleviation in a disease condition, for example in response to a drug.

The medical condition may be selected from the group consisting of: CVD, endothelial dysfunction in the form of atherosclerotic disease and inflammation.

The method may comprise using a vascular risk factor characteristic of the patient together with the said comparison of an optical characteristic with calibration data, the vascular risk factors being selected from the group of hypertension, hypercholesterolemia, diabetes, smoking and aging.

### Preferred features of the second and third aspects of the invention are as for the first aspect mutatis mutandis

### Brief description of the figures

Figure 1 shows a first embodiment of a device according to the invention: (a) a cross-section perpendicular to the direction of light travel from the light emitter to the light collector, (b) a cross-section parallel to the direction of light travel and (c) a plan view of the device.
Figure 2 shows a further embodiment of a device according to the invention: (a) a cross-section parallel to the direction of light travel from the light emitter to the light collector and (b) a plan view of the device. The cross-section perpendicular to the direction of light travel is as in figure 1 a.
Figure 3 shows a further embodiment of a device according to the invention: (a) a cross-section perpendicular to the direction of light travel from the light emitter to the light collector, (b) a plan view of the device. The cross-section parallel to the direction of light travel is as shown in figure 1 b.
Figure 4a shows an isometric view of a further embodiment of a device according to the invention.
Figure 4b shows a cross-section through the cell receiving region of the embodiment shown in figure 4a.
Figure 5a shows a plan view of a further embodiment of a device according to the invention.
Figure 5b shows a cross-section through the cell receiving region of the embodiment shown in figure 5a.
Figure 6a shows a plan view of a further embodiment of a device according to the invention having a curved light pathway through the cell receiving region.
Figure 6b shows a plan view of a further embodiment of a device according to the invention having a curved light pathway through the cell receiving region and micro-optical components.
Figure 7a shows a plan view of a further embodiment of a device according to the invention.
Figure 7b shows a closeup view of the light collector region of the embodiment shown in figure 7a.
Figure 7c shows a closeup view of the light emitter region of the embodiment shown in figure 7a.
Figure 8a shows a schematic cross-section through the cell receiving region of the embodiment shown in figure 7a perpendicular to the direction of light travel.
Figure 8b shows a schematic cross-section of the embodiment shown in figure 7a along the length of the chamber, parallel to the direction of light travel.
Figure 9 shows the results from a model of light propagation through a single cell layer on a low RI support surface as used in a device according to the invention.
Figure 10 shows an example of the optical characteristics of a cell layer in a device as shown in figures 4a and 4b as a function of time in culture, with ionomycin added at the final time point.

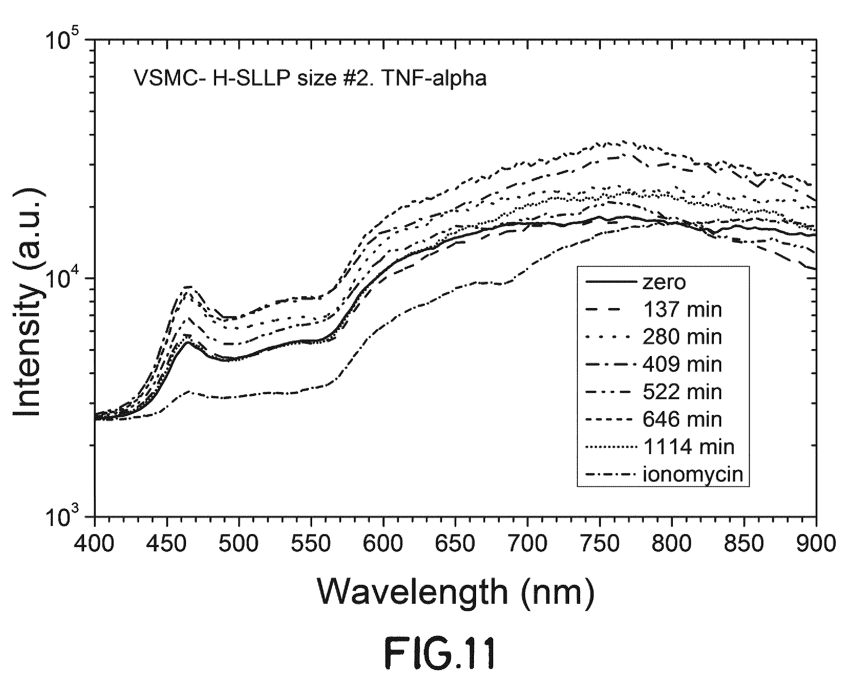

Figure 11 shows an example of the optical characteristics of a cell layer in a device shown in figures 4a and 4b as a function of time in culture, with TNF-alpha injected and with ionomycin added at the final time point.
Figure 12 shows an example of the optical characteristics of a cell layer in a device comparing the PIN after 36 h of culture in regular medium (top) or after an additional 12 h of culture in medium with added IL-4, in the three BDTs (bottom).

### Description of embodiments

In the following description common parts are referred to by common numerals.

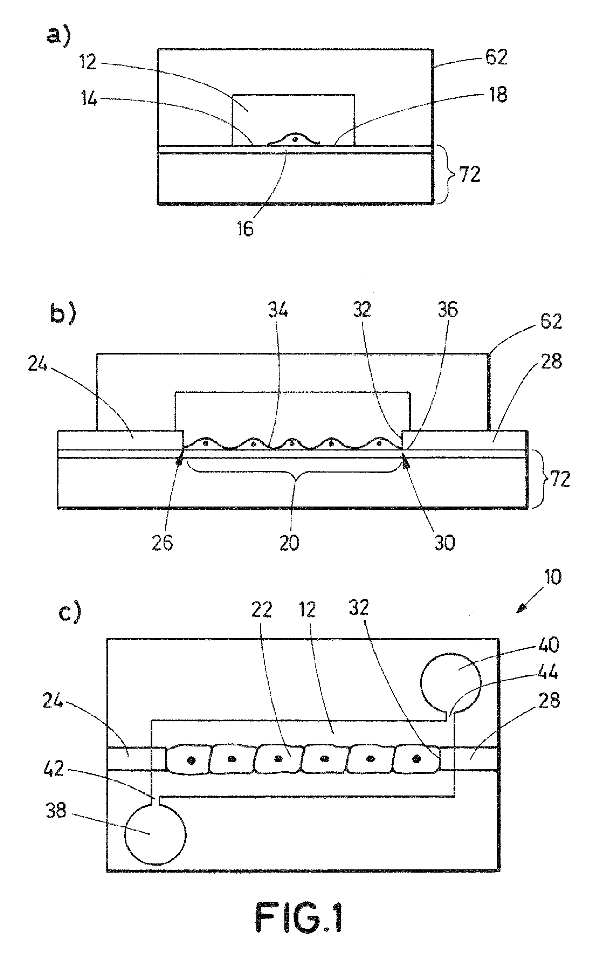

Referring to figures 1 a to 1 c, a preferred embodiment of a device (10) according to the invention comprises:
a chamber (12), configured to contain a liquid, having a wall (14) comprising a low refractive index (RI) material (16) with RI in the range around 1.01 to around 1.340, the wall (14) having a surface (18) comprising a cell receiving region (20) overlying the low RI material (16), the cell receiving region (20) comprising a cell receiving surface (34) adapted to permit adhesion of a plurality of cells (22),
a light emitter (24) at a first position (26) adjacent to the cell receiving region (20), and
a light collector (28) at a second position (30) adjacent to the cell receiving region (20) such that the cell receiving region (20) lies between the first and second positions (26, 30), the light collector (28) being configured to receive light travelling in a direction substantially parallel to the said surface (34).

The light emitter (24) is configured to couple light into the said plurality of cells (22) and the light collector (28) is configured to receive light that is guided within the plurality of cells (22) in part of the optical path from the light emitter (24) to the light collector (28).

The RI of the low RI material (16) may be selected such that light is guided within the plurality of cells (22) by total internal reflection at the interface of the low RI material (16) adjacent to the plurality of cells (22). This embodiment may be adapted to be used with mammalian cells and the RI may be in the range 1.01 to around 1.334, or in the range around 1.10 to below 1.334. This embodiment may be adapted to be used with bacteria on the surface (34) and the RI may be selected to be in the range 1.01 to around 1.340, or in the range around 1.10 to below 1.340.

The plurality of cells (22) is shown diagrammatically as having an irregular cytoplasm and a nucleus and as being one cell wide. In practice the plurality of cells (22) will typically comprise a cell layer, wherein the cells are arranged in a 2D layer in the cell receiving region (20), and optionally as a 3D layer.

In this embodiment the cell receiving surface (34) of the cell receiving region (20) is aligned with the lower edge (36) of the optical cross-section (32). In some embodiments the light collector (28) or the light emitter (24) are lowered such that the cell receiving region (20) intersects the optical cross-section (32) of the light collector (28) or the light emitter (24).

The device (10) comprises first and second ports (38, 40) to permit entry of liquid into the chamber (12), and fluid channels (42, 44) linking the ports (38, 40) and the chamber (12). The chamber (12) of the device (10) is defined within the body of the device (10), which comprises a substrate (72) and a cover (62), the chamber (12) being defined by a recess in the cover (62). The substrate (72) provides the wall (14) of the device (10) on which the cell receiving region (20) is provided.

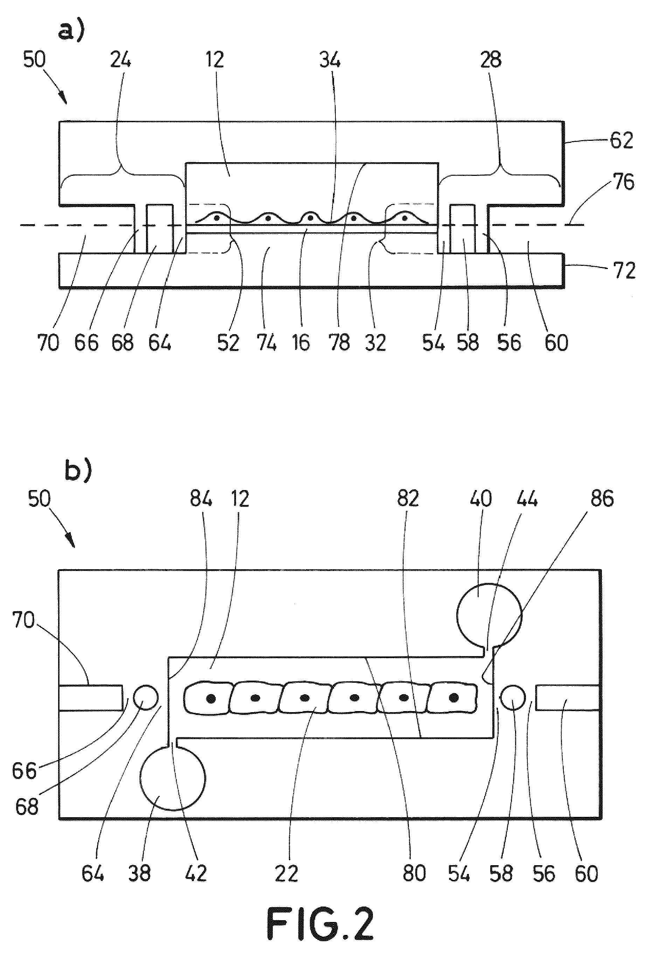

Referring to figure 2, in a further embodiment, the device (50) is described wherein the optical cross-section (32) of the light collector (28) is positioned relative to the cell receiving surface (34) of the cell receiving region (20) such that the projection of the said surface (34) in the direction of the light collector (28), as shown by the line (76), intersects the optical cross-section (32). In this embodiment the device (50) has an orientation in which the cell receiving surface (34) is at the base of the chamber (12) and the lowest point of the said optical cross-section (32) is below the level of the cell receiving surface (34).

Similarly the light emitter (24) comprises an optical cross-section (52) through which light passes into the chamber (12), wherein the optical cross-section (52) is positioned relative to the cell receiving surface (34) of the cell receiving region (34) such that the projection of line (76) of the said surface (34) towards the light emitter (24) intersects the optical cross-section (52).

The low RI material (16) may be selected from nanoporous silica, a nanoporous metal oxide, a porous polymer such as porous PDMS, or a low RI solid polymer cast, coated or moulded at part of the wall (14).

The substrate (72) provides the wall (14) of the device (50) on which the cell receiving region (20) is provided, the wall (14) being provided on a region (74) of the substrate (72) raised above the surrounding regions of the substrate (72) so that the projection of the cell receiving surface (34), shown by the line (76), intersects the optical cross-section (32) of the light collector (28) and the optical cross-section (52) of the light emitter (24). The cover (62) defines the further walls (78, 80, 82, 84, 86) of the chamber (12), optical components of the light collector (28) and the light emitter (24) as described above, and fluidic ports (38, 40) and channels (42, 44) connecting to the chamber (12).

The low RI material (16) is provided to form the surface (34) of the raised region (74) of the substrate (72).

In this embodiment the light collector (28) comprises:
a first lens (54) forming a wall (86) of the chamber (12),
a second lens (56) having its surface opposing the first (54), both lenses (54, 56) formed from the material of the cover (62),
a void (58) to define the lenses (54, 56), and
an alignment channel (60) in the form of a recess to receive a collector optical fibre.

Similarly, the light emitter (24) comprises:
a first lens (64) forming a wall (84) of the chamber (12),
a second lens (66) having its surface opposing the first (64), both lenses (64, 66) formed from the material of the cover (62),
a void (68) to define the lenses (64, 66), and
an alignment channel (70) in the form of a recess to receive an emitter optical fibre.

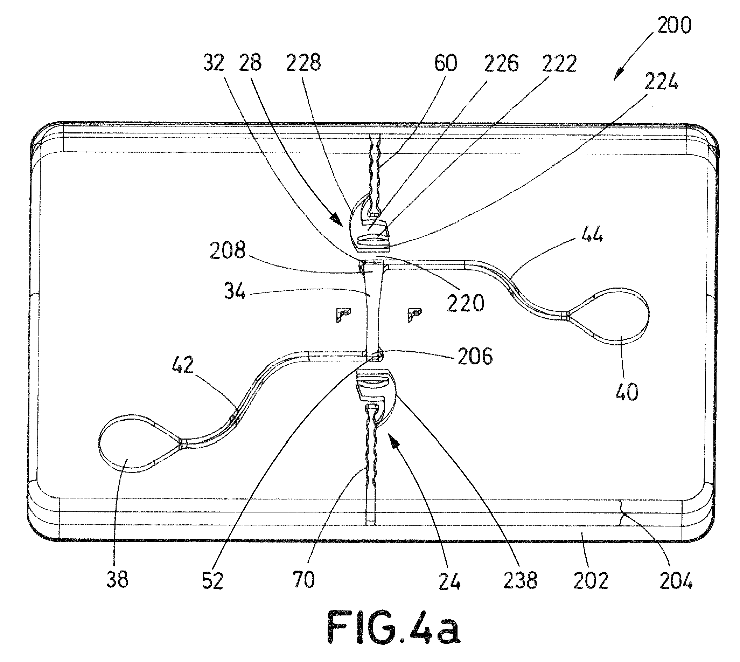

In variants of this embodiment the light collector (28) and/or the light emitter (24) may comprise a convex lens in a similar manner to that in figure 4a in place of the pair of concave lenses (54, 56) and (64, 66).

In this embodiment the chamber (12) is rectilinear, having a rectilinear cross section in the direction of light travel from the light emitter (24) to the light collector (28) and orthogonal to that direction, and the wall (14) of the chamber (12) comprising the cell receiving region (20) is planar.

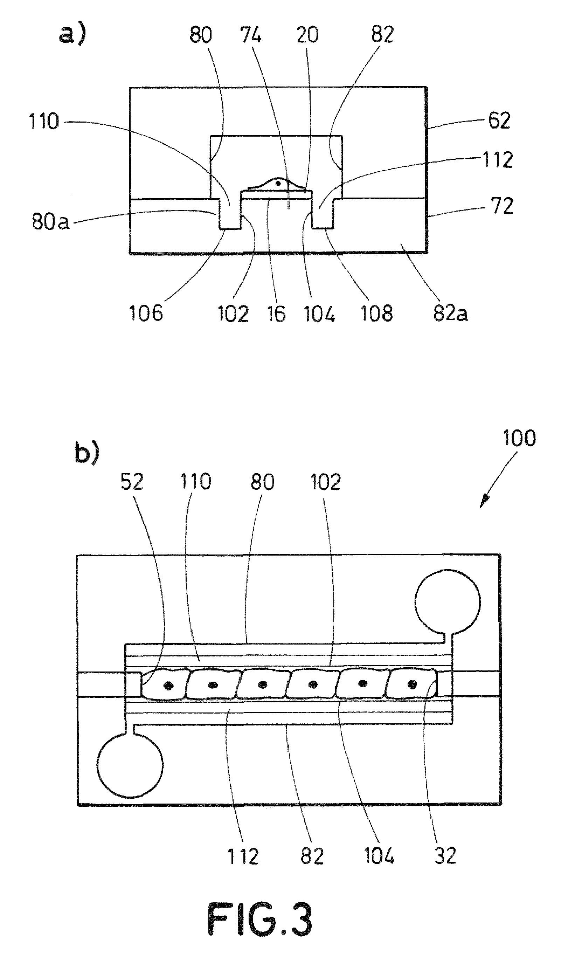

Referring to figure 3, in a further embodiment the device (100) comprises features in common with device (50) having common numerals. The device (100) comprises a step profile (102, 104) on each side of the cell receiving region (20) extending along the light path from the light emitter (24) to the light collector (28) to define the cell receiving region (20) as the region of the wall (14) between the two step profiles (102, 104). The cell receiving region (20) is provided as the region (74) raised above the neighbouring areas (106, 108) of the wall (14) of the device (100), the step profiles (102, 104) forming the sides of the region (74). In this embodiment the step profile (102, 104) has an angle to the cell receiving region (20) of substantially 90 degrees, though other angles are possible.

The raised region (74) is provided as part of the substrate (72) forming part of the device (100), in this embodiment by providing a recess (110, 112) on both sides of the region (74) Such recesses (110, 112) may be formed by etching into the surface of substrate (72) or by moulded features in the case that the substrate (72) is formed from moulded methods.

Optionally, the step profiles (102, 104) may have a scattering surface selected from a roughened surface, a variable geometry diffraction grating, a random or semi-random diffraction grating or random or semi-random mirrors. Optionally, neighbouring regions of the device (100), such as the walls (80, 80a, 82, 82a) of the chamber (12), may comprise a roughened surface, a variable geometry diffraction grating, a random or semi-random diffraction grating or random or semi-random mirrors that in use will act in the same way to reduce or prevent reflection or scattering of light back into the cell layer or into the light collector (28).

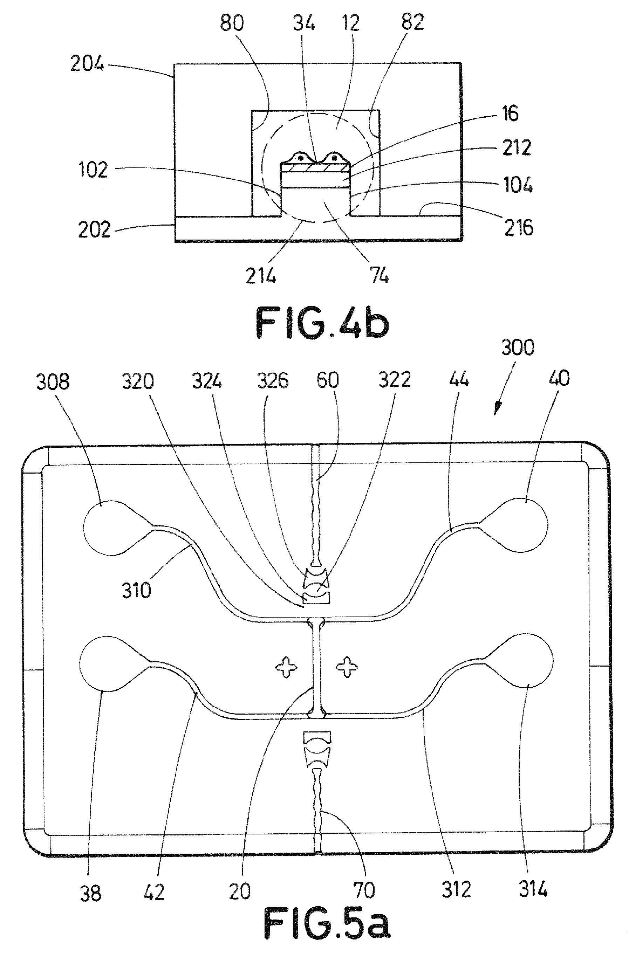

The low RI material (16) may be a film of a nanoporous silica material as described herein with respect to figures 4a and 4b, supported on the raised region (74). In some embodiments the low RI material (16) comprises a layer or sheet of a low RI polymer coated on or bonded to the substrate (72), or entrapped between the substrate (72) and the cover (62). The polymer film may comprise a low RI polymer such as MY polymers MY132A, MY133 (MY Polymers, Nes Ziona, Isreal) as described herein. A polymer sheet may be formed from a low RI material such as bacterial cellulose formed for example according to the method of Bottan et al. (ACSNano 9(1) 2015 206-219).

Referring to figures 4a and 4b, the device (200) comprises a substrate (202) and a cover (204), the substrate (202) being formed in silicon and the cover (204) being formed in a moulded polymer, for example PDMS, both according to standard techniques. The fluidic ports (38, 40) and channels (42, 44) are defined by moulding or embossing in the surface of the cover (204), the channels (42, 44) being closed when the cover (204) is mounted on the substrate (202). The ports (38,40) may for example comprise an area sealed between the cover (204) and the substrate (202) that may be pierced by a fluidic connection such as a tube or needle. The cell receiving region (20) is provided on a raised region (74) of the substrate (202) as shown in figure 4b, and comprises a cell receiving surface (34) onto which cells may be seeded and cultured to form a layer. In this embodiment the cell receiving surface (34) comprises a layer of a low RI material (16) in the form of nanoporous silica formed from thermal treatment of a material comprising tetraethyl orthosilicate (TEOS) as described below. This overlies a layer (212) of silicon oxide, in turn on a raised region (74) of the silicon substrate (202). Such a region (74) arrangement may be formed by coating a silicon wafer with first silicon oxide and the nanoporous silica, then etching the surface (216) of the substrate (202) to provide the raised region (74) and layer (212) and the low RI material (16). The cover (204) is then bonded to the surface (216). In the case that the cover (204) is formed from PDMS such bonding may be done using oxygen plasma activation of the PDMS surface as known in the art. The device (200) comprises microoptics between the chamber (12) and the fibres, comprising a window (220) and a bi-convex lens (222) formed from the material of the device (50) cover (62), the lens being defined by voids (224, 226) in the said material. The optical cross section (32) is increased by the microoptics light passing through which is directed by the microoptics onto the end of the fibre when mounted in the alignment channel (60). A channel (228) open to the alignment channel (60) is provided to allow escape of air from the void (222) during moulding and curing of the material. Similar microoptics are provided as part of the light emitter (24).

The position of the light collector optics relative to the cell receiving surface (34) is shown in figure 4b. The raised region (74) feature provides that the surface (34) is aligned substantially with the centre of the optical fibre forming part of the light collector (28), when the fibre is mounted in the alignment channel (60), as shown by the position (214) of the outer circumference of the fibre. The centre of the fibre may also be the axis of the optical components such as lenses and windows (222, 220) provided on the device (200).

Typical dimensions of the embodiment are as follows. A nanoporous silica-coated silicon wafer is structured with a step of 62.5µm height to lift the level of the cell receiving surface (34). The height of this step profiles (102, 104) correspond to half the diameter of commercially available fibre optics, having an outer diameter of 125µm. The fibre-optics are available with different core sizes for the UV-Vis range (4µm, 10µm, 25µm, 50µm, 62.5µm and 105µm), so this configuration allows the cell receiving surface (34) to be aligned with the core, whichever core diameter is used. In some versions of the embodiment a large core diameter may be used for the collector fibre and a smaller core diameter for the emitter fibre to give improved signal-to-noise ratio. The channel forming the chamber (12) may be typically 200um wide and 140um high above the surface 216 of the substrate (202).

In this embodiment the width of the cell receiving region (20) perpendicular to the light pathway from the light emitter (24) to the light collector (28) increases along the pathway from the light emitter (24), as shown in figure 4a, from point (206) to point (208) so as to increase (i) the efficiency of light interaction with the cell layer as the rays disperse from the optical cross-section (52) of the light emitter (24) or (ii) the efficiency of cell seeding in the channel (238) when cells are introduced from the light emitter (24) end of the channel (238) - as the cross-sectional area of the channel (238) increases, the flow velocity will decrease, allowing cells to sediment to the surface more readily, so increasing the seeding efficiency downstream along the channel (238) where the cell density in the liquid has been depleted by upstream seeding. The light collector (28) has a wider optical cross-section (32) than the light emitter (24), to capture light from the wider end (208) of the cell receiving region (20). In this embodiment the cell receiving region (20) is on the region (74) within the device (200) as described above, and the step profiles (102, 104) are formed such that they diverge along the direction of light travel to form a broadening platform.

The nanoporous silica layer may be produced from Tetraethyl orthosilicate Si(OC2H5)4 (TEOS) using a micelle assisted sol-gel method as described by Karasinski et al (Optical Materials 2011, 33(12) 1989-1994). TEOS was mixed with the non-polar surfactant Triton X-100 and the resulting gel spin-coated at 400 rpm on a silicon wafer to form a 400nm thick layer on the surface. Subsequently, the coated wafer was heated in an oven to 450°C with a ramp of 2°C/min, kept at that temperature for 30 min. and cooled down to room temperature again with a ramp of 2°C/min to avoid thermal stress. Heating to 450°C resulted in the annealing of the micellar inclusions while avoiding a collapse of the porous structure, thus creating a material with nanometric air inclusions. The resulting porous TEOS-derived silica film had a thickness of approximately 300nm (estimated using ellipsometry and confirmed by FIB (Focused Ion Beam) imaging) and had a RI of 1.21 (measured using ellipsometry). FIB imaging was not able to resolve pores in the layer, which means that pore-size is on average well below 100nm.

Other methods of forming a low RI nanoporous silicate layer may be used in the embodiments shown in figures 1 to 4 and 6, for example by oxidising a porous silicon layer fabricated on the surface of the silicon substrate, or plasma deposition of low density silicon dioxide films as described for example in Nakamura K et al., J Nanosci Nanotechnol. 2011 Apr;11 (4): 2851-5.

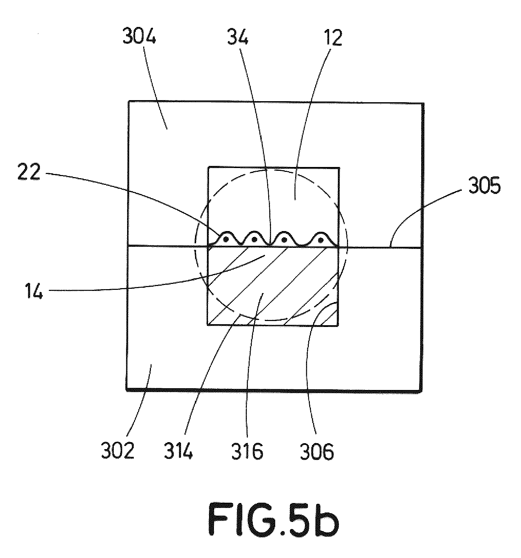

Referring to figures 5a and 5b, a further embodiment is shown, where the device (300) comprises the substrate (302) and the cover (304) bonded together at a join (305), the low RI material (16) of the wall (14) of the chamber (12) being provided by a solidified low RI polymer (316) introduced into the device (300) in liquid form in a microfluidic channel (306) formed in the substrate (302) and situated below the cell receiving region (20) within the chamber (12) formed in the cover (304). The device (300) comprises an inlet (308) for the low RI polymer(316), an inlet fluidic channel (310) and outlet fluidic channel (312), connected to the channel (306), and an outlet (314). The device (300) comprises first and second ports (38, 40) and fluidic channels (42, 44) to permit fluid entry to the chamber (12) as described before. The collector optics forming the light collector (28) comprise a window (320) adjacent to the light collector end of the cell receiving region (20), a microlens (322) formed in the material of the cover (304), and voids (324, 326) to define the surfaces of the microlens (322). The fibre optic alignment channel (60) is provided to couple light from the microlens (322) to the fibre, and is configured such that the optical cross-section of the light collector (28) is aligned with the cell receiving surface (34) as described before and as shown in figure 5b, wherein the outer circumference (314) of the optical fibre is positioned such that the centre of the fibre is substantially at the level of the surface (34). Typical dimensions of the channel (306) and the chamber (12) are around 200um wide and around 125um deep. The channel (306) and chamber (12) may have substantially the same cross-sectional shape or may have different shapes. An identical optical arrangement is provided for the light emitter (24) to couple a fibre positioned in alignment channel (70) to the chamber (12).

The device (300) may be fabricated using soft lithography as known in the art, the substrate (302) and cover (304) both being formed of moulded PDMS. The substrate (302) and the cover (304) may be identical components, each comprising a fluidic microchannel (306), two biconvex microlenses (322) and two self-alignment channels (60, 70). The microchannel (306) in the substrate (302) is used as the polymer channel, and the microchannel (306) in the cover (304) is used as the liquid and cell suspension flow channel and chamber (12).

To form the device (300), firstly the bottom side of the device (300) is placed upside down against a flat substrate (302) (e.g. a silicon wafer) to close the fluidic channel (306) and the low refractive index polymer (316) is deposited on the inlet ports (308). By aspiration from the output port (341) the channel (306) is filled; the polymer (316) is then cross-linked, for example by UV exposure. After this step, the bottom side -having the low polymer layer- is released from the substrate (302) and bonded by plasma-activation with the top side device, assuring irreversibly seal. Alignment between the top and bottom sides may be done with the help of alignment marks and using de-ionized (DI) water as a lubricant. The blind fibre alignment channel (60) is then used to retain the fibre optic at the required distance from the biconvex microlens (322) to obtain a parallel beam coupling the fibre core to the cell layer, and similarly for the light emitter (24).

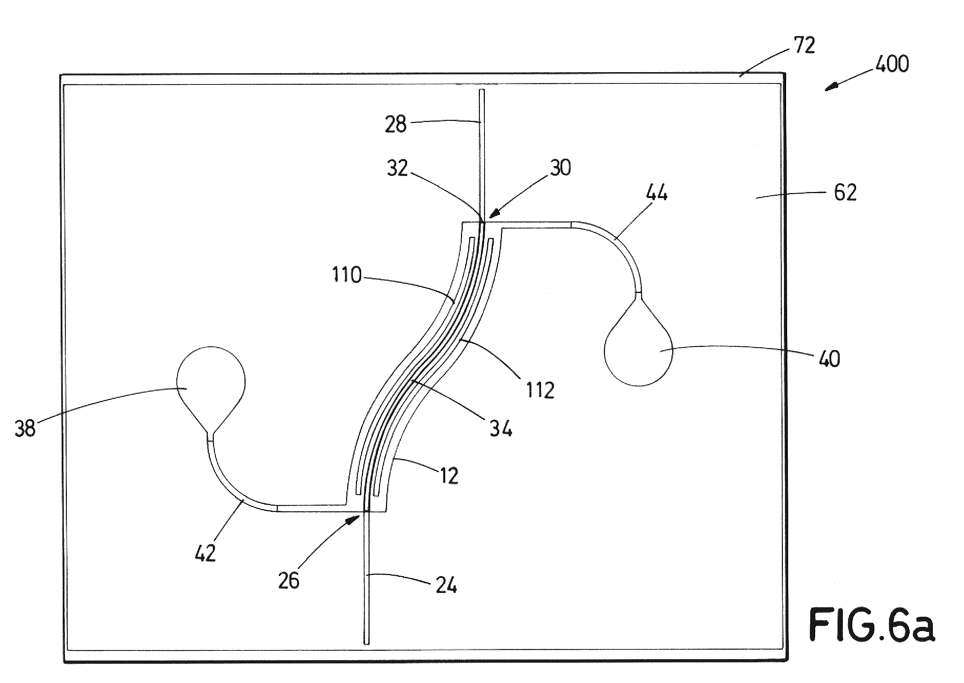

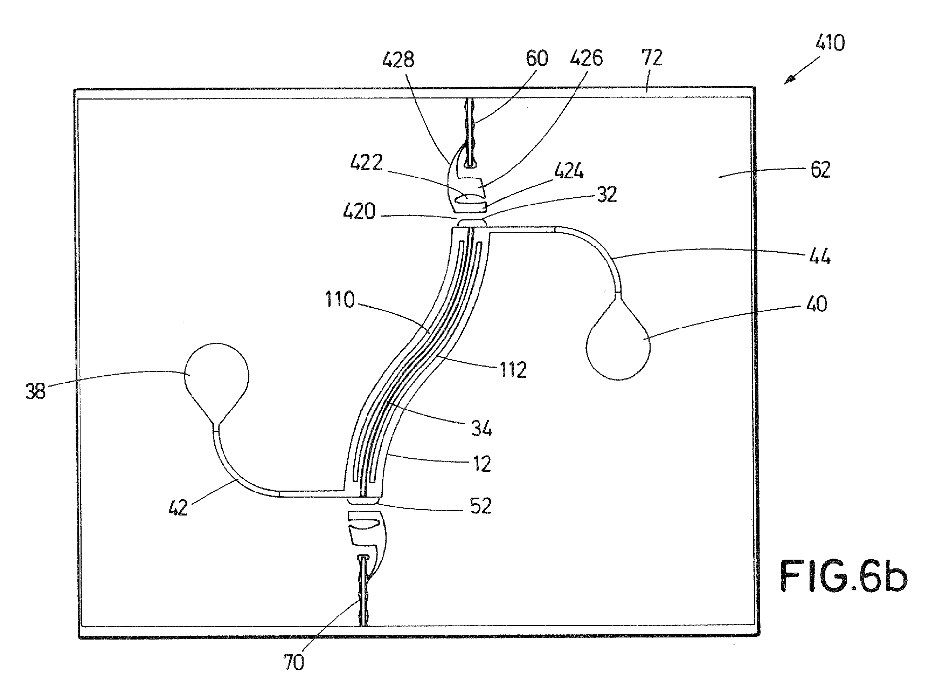

Referring to figures 6a and 6b, in further embodiments the device (400, 410) is configured such that the optical pathway from the light emitter (24) to the light collector (28) via the cell layer is curved. In this way light that is guided within the cell layer reaches the light collector (28), while non-guided light is impeded from reaching the light collector (28). Specifically, the device (400) comprises features as shown in figures 1 to 3, with common numerals. The light collector (28) comprises an optical fibre mounted on the device (400) to provide an optical cross-section (32) for light collection from the cell receiving surface (34). The light emitter (24) similarly comprises an optical fibre. The cell receiving surface (34) has a reverse curve between the first position (26) and second position (30), such that the axes of the fibres are offset from one another, so that non-guided light from the light emitter (24) does not reach the light collector (28). The device (100) in cross-section is substantially as shown in figure 3a, with the recess (110, 112) on each side of the cell receiving region (20), which is provided on a region (74) formed between the recesses (110, 112). The cell receiving surface (34) may comprise a layer of low RI nanoporous silica as shown in figure 3b and 4b.

The device (410) is similar to device (400) and has common micro-optical features with device (300), with common numerals. Alignment channels (60) for the collector optical fibre and alignment channels (70) for the emitter optical fibre are offset one from another, and the device comprises microoptics between the chamber (12) and the fibres, comprising a window (420) and a bi-convex lens (422) formed from the material of the device cover (62), the lens (422) being defined by voids (424, 426) in the said material. The optical cross section is increased by the microoptics, as shown as the region (32), light passing through which is directed by the microoptics onto the end of the fibre when mounted in the alignment channel (60). A channel (428) open to the alignment channel (60) is provided to allow escape of air from the void (424, 426) during moulding and curing of the material. Similar microoptics are provided as part of the light emitter (24). A suitable material for the cover (62) is PDMS as described previously.

It will be understood that other patterns of curvature of the optical path between the light emitter (24) and the light collector (28), and of the cell receiving region (20) and surrounding step (102, 104) profile features providing it, are within scope of the invention. For example, the axes of the fibres or alignment channels (60, 70) may be at an angle one to another; the cell receiving region (20) may have one or more radii and centres of curvature.

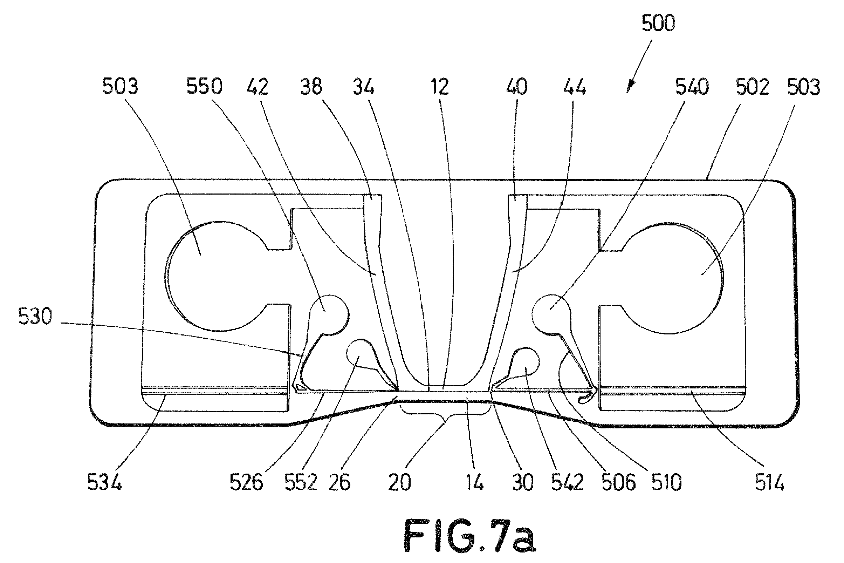

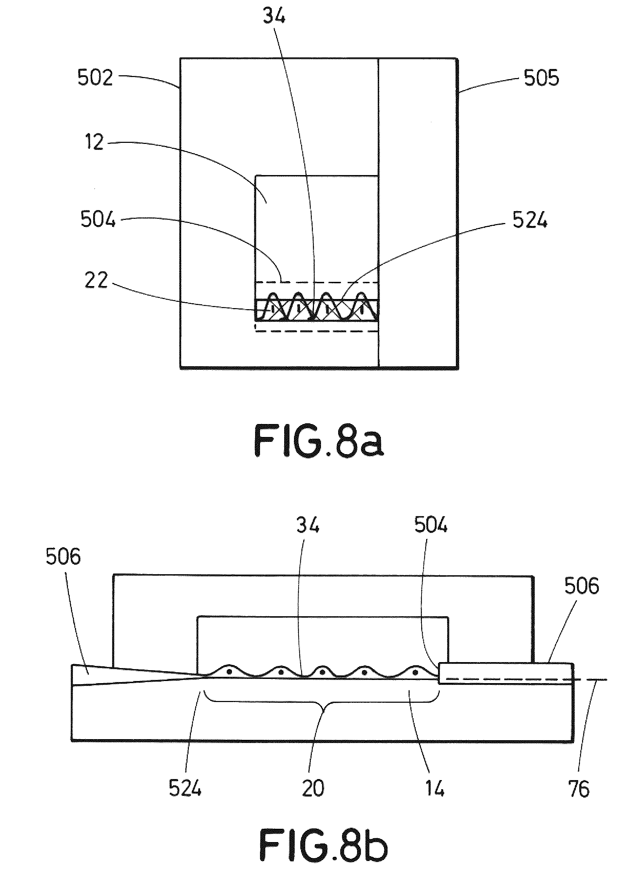

Referring to figures 7a to 7d and figure 8, an embodiment of the device (500) according to the invention is formed as a moulded body (502) comprising fluidic and optical features and a cover (505) that when bonded to the body (502) closes the fluidic channels (42, 44) formed in body (502). The body (502) comprises alignment features (503) to interfit with matching features on the cover (505) to allow accurate positioning of the body (502) and cover (505). The device (500) comprises a chamber (12) in the form of a fluidic channel (42, 44) connected to a first port (38) via a first fluidic channel (42) and a second port (40) via a second fluidic channel (44), allowing liquid to be flowed through the device (500). The chamber (12) comprises a wall (14) formed from a low RI material (16) having an RI in the range around 1.01 to around 1.30, the wall having a surface facing into the chamber (12) and a planar cell receiving region (20) adapted to allow adhesion by cells. The device (500) is viewed in side elevation in figures 7a to 7c in a preferred orientation for use in which the wall (14) forms the base of the chamber (12).

The device (500) comprises:
the light emitter (24) at the first position (26) adjacent to the cell receiving region (20), and
the light collector (28) at a second position (30) adjacent to the cell receiving region (20) such that the cell receiving region (20) lies between the first and second positions (26, 30), the light collector (28) comprising an optical cross-section (32) through which light passes from the chamber (12) into the light collector (28),
wherein the optical cross-section (32) is aligned with the planar surface (34) of the cell receiving region (20) adjacent to the light collector (28) such that the projection of the said surface (34) intersects the optical cross-section (32), and wherein the optical cross-section of the light collector (32) comprises the tip (504) of a collector waveguide (506) formed on the device (500).

In this embodiment the collector waveguide (506) is formed using a solid polymer within a receiving structure (508) in the surface of the body (502), in the form of a microfluidic channel (510) into which the solid polymer may be introduced in liquid form and then solidified, for example by polymerisation in-situ. Light may be coupled out from the collector waveguide (506) via an optical fibre mounted on the device (500), in an alignment channel (514) to align the fibre with the collector waveguide (506).

In this embodiment the light emitter (24) comprises an emitter waveguide (526) having a tip (524), the emitter waveguide (526) being tapered such that a dimension of the tip (524) is smaller than a cross-sectional dimension of the emitter waveguide (526) at a position distal to the tip (524). In this embodiment the taper provides a ratio of a distal cross-sectional dimension to that at the tip (524) in the range around 10:1. The emitter waveguide (526) is formed using a solid polymer within a receiving structure (528) in the surface of the body (502), in the form of a microfluidic channel (530) into which the solid polymer may be introduced in liquid form and then solidified. Light may be coupled into the emitter waveguide (526) via an optical fibre mounted on the device (500), in an alignment channel (534) to align the fibre with the emitter waveguide (526).

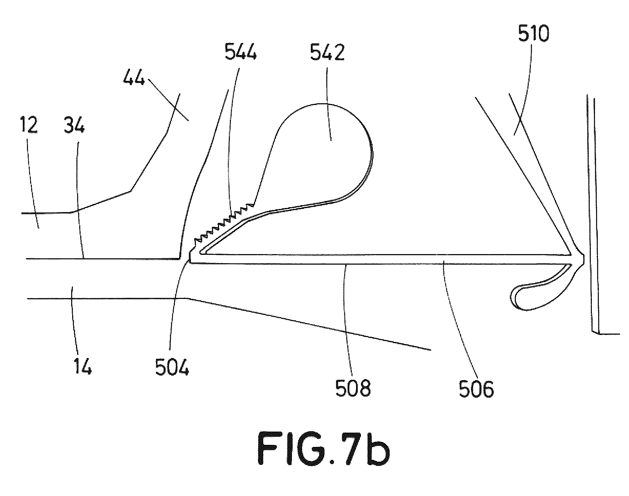

Referring to figure 7b, the collector waveguide (506) comprises a receiving structure (508) comprising the fluidic channel (510), the collector waveguide (506) being formed in a straight portion of the channel (510) aligned with the surface (34) of the cell receiving region (20) such that the projection of the surface (34) towards to optical cross-section defined by the tip (504) of the collector waveguide (506) intersects the optical cross-section (32). The fluidic channel (510) is connected to ports (540, 542) to allow a polymer to be introduced in liquid form and then polymerised in situ within the channel to form the collector waveguide (506). The channel portion (544) proximal to the chamber (12) comprises a non-uniform grating, for example a random grating, to reduce coupling of scattered light into the collector waveguide (506).

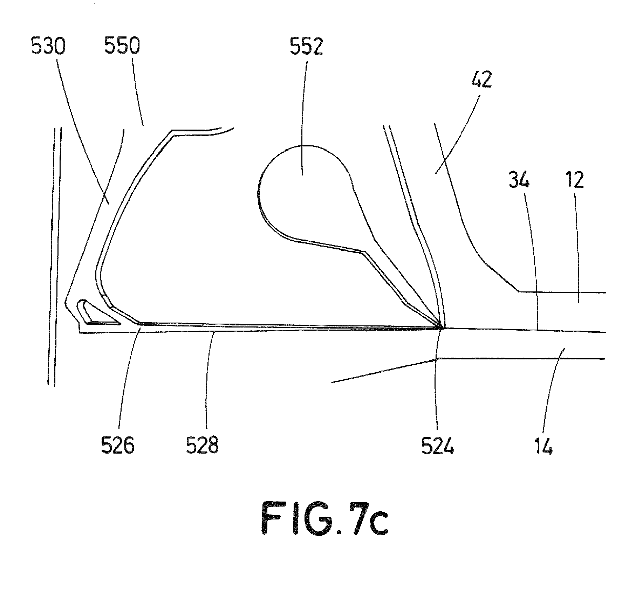

Referring to figure 7c, the emitter waveguide (506) comprises a receiving structure (528) comprising a microfluidic channel (530), the emitter waveguide (506) being formed in a tapering portion of the channel (530) aligned with the surface (34) of the cell receiving region (20) such that the projection of the surface towards the optical cross-section (52) of the light emitter, defined by the tip (524) of the emitter waveguide (506), intersects the optical cross-section (52). The channel (530) is connected to ports (550, 552) to allow a polymer to be introduced in liquid form and then polymerised in situ within the channel (530) to form the waveguide (506).

Referring to figures 8a and 8b, the principle of the device (500) is shown schematically. Figure 8a shows the optical cross-section of the collector waveguide (32) defined by the tip (504) of the collector waveguide (506) (dotted lines) and the optical cross-section of the emitter waveguide (52) defined by the tip (524) of the emitter waveguide (526) (solid lines, the cross-sectional area shown with cross-hatched lines) superimposed on a cross-section through the chamber (12) and the cell receiving region (20), with a plurality of cells (22) in place on the cell receiving surface (34). The collector cross-section (32) intersects the projection of line (76) of the cell receiving surface (34) and is larger than the emitter cross-section (52), which in this embodiment is provided level with the surface (34). In this way the device (500) is configured to couple light efficiently from the light emitter (24) into the cell layer through a smaller cross-section (52) provided by the tip (524) of the tapered emitter waveguide (526), and to collect light guided through the plurality of cells (22) with a larger cross-section (32) of the tip (524) of the collector waveguide (506).

Typical dimensions in this embodiment are: chamber (12) height in the range around 50um to around 300um, such as around 150um; width in the range 30um to 300um, or in the range 50um to 100um, typically 60um to 80um. The emitter optical cross-section (52) may be defined by the tip (524) dimensions of the emitter waveguide (526) and may have a height perpendicular to surface (34) in the range 1um to 10um or in the range 2um to 5um, typically around 2um, and a width may be around the width of the cell receiving region (20), such as in the range 5um to 150um, in the range 10um to 100um, such as 40um to 60um. In this way the light may be emitted efficiently into the plurality of cells (22), which may be a monolayer having a depth above the surface (34) in the range 1um to 5um. The collector optical cross-section (32) may have a height greater than or equal to the height of the emitter cross-section (52), for example in the range 5um to 50um, in the range 10um to 30um, such as around 20um, and a width that may be around the same width as the width of the cell receiving region (20), such as in the range 5um to 300um, in the range 10um to 100um, such as 60um to 80um. The aspect ratio of the width to the height at the tip of the collector and emitter waveguides (504, 524) may be in the range around 4:1 to 20:1.

In this way in this embodiment the optical cross-section (32) of the light collector is larger than the optical cross-section (52) of the light emitter, and the light collector (28) is large enough to collect light guided within the plurality of cells (22) at a range of total internal reflection angles, so providing efficient light collection. Also, the minimum dimension across the optical cross-section at the tip (524) of the light emitter (24) is smaller than the expected cross-sectional area of the plurality of cells (22) along the light path from the light emitter (24) to the light collector (28), so that the light emitter (24) is configured to direct light through the central part of the plurality of cells (22) to the light collector (28), while reducing light travelling outside the cell plurality (22).

The device (500) is typically oriented in use such that the wall (14) of the chamber (12) comprising the cell receiving region (34) forms the base of the chamber (12). The optical cross-section (32) of the light collector is then aligned with the cell receiving surface (34) such that the cell receiving surface (34) is at a vertical level above the lowest part of the optical cross-section (32) but below its highest part.

The body (502) may be formed by moulding of a low RI polymer, the wall (14) being formed from the polymer. Suitable polymers are MY-132A and MY-133 V2000 (MY Polymers Inc., Nes Ziyona, Israel). These both have properties similar to PDMS, but with low RIs of n = 1.32 and n = 1.33, respectively. These are UV-curable polymers distributed as adhesives for bio-applications and are stated by the manufacturers as non-cytotoxic. The polymers may be moulded in a mould formed from SU-8 photopolymer (Microchem, Inc., Westborough, MA 01581 USA) by standard methods known in the prior art for SU-8 mould formation and for UV-photocuring of the polymers, according to the manufactuers' instructions.

The cover (505) may be formed using a rigid epoxy-based polymer such as OSTE (Off-Stoichiometry Thiol-Enes and Off-stoichiometry thiol-ene-epoxies) (Mercene Labs, Stockholm, Sweden). Applying heat, OSTE becomes a soft solid, which can afterwards be removed from a SU-8 mould. OSTE exposure to UV results in a rigid, hard material. The cover (505) comprises all or part of the self-alignment channels (514, 534) for the fibre-optics and gives stability to the device (500). Alignment of the substrate and cover is enabled by alignment structures (503). The body (502) and the cover (505) are assembled together and the integrated waveguides (506, 526) are fabricated by depositing SU-8 on the inlet ports (542, 552) of the microchannels and aspirating from the outlet ports (540, 550). Subsequently, the device (500) is exposed to UV, simultaneously crosslinking the SU-8 and performing the second curing step for the OSTE. The refractive indices of the materials are: nOSTE=1.56, nSU-8=1.58, so providing waveguiding within the SU8 waveguide cladded by the MY polymer on 3 sides and the OSTE cover on the fourth side.

Each of the embodiments described above may be used with a multi-wavelength light source coupled to the light emitter (24) and a multiwavelength detector, optionally a spectrophotometer, coupled to the light collector (28). A source may be a polarised or a non polarised source (including but not restricted to a halogen lamp, a laser, a LED) and a detector may comprise a polarimeter, a monochromator and/or a photodiode. The embodiments may form part of an apparatus configured to (i) measure the optical characteristics of a plurality of cells in a first physiological state, (ii) measure the optical characteristics of a plurality of cells in a second physiological state and (iii) to compare the optical characteristics to derive information on the first and/or second physiological states. The apparatus may be configured to measure the response of cells in the device in a first physiological state to a compound in liquid contacting the cells, the apparatus being configured to measure a baseline optical characteristic of the cells in a second physiological state without the compound present, to measure a test optical characteristic of the cells with the compound present, and to compare the test optical characteristic with the baseline optical characteristic to derive cell response data. The apparatus may comprise liquid actuation means such as pipetting apparatus or flow actuation means to introduce a baseline liquid such as buffer or culture media into the chamber, then to introduce a liquid comprising the compound.

The invention will now be exemplified by the following non-limiting examples.

### First example

Modelling of light propagation in a device according to the invention.

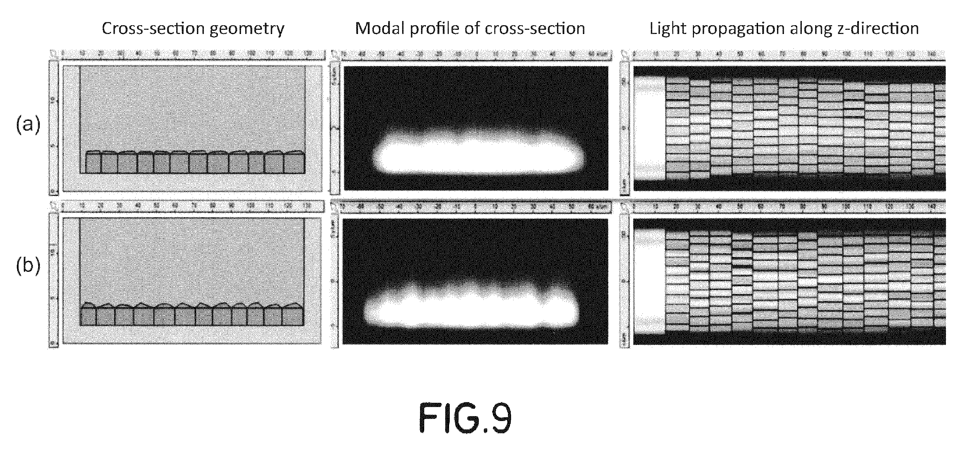

Light propagation through a mono-layer of endothelial cells was modelled using mode-matching numerical simulations carried out with the software FIMMPROP (Photon Design, Oxford, UK), a commercially available software package designed for the calculation of mode-propagation in waveguides. The results are summarized in figure 9. Two planar waveguides with different surface roughness were modelled in order to model the influence of morphological changes in an EC mono-layer. ECs adhered to the bottom of the microfluidic channel are represented by rectangles of certain constant height, which have trapezoids of random shape on top to simulate height fluctuations. The left column of figure 9 contains an example of the respective geometries of the model cross-section. The different shading within the cross-section indicate the difference in RI. The RI of the cells was assumed to be ncells = 1.335, the RI of the culture medium as the upper cladding, nmedium = 1.333. Bottom and sidewalls of the fluidic channel were considered to have a RI, nsupport = 1.32, which is well below that of the cells. The cells layers in both simulations are between 2 and 2.6 µm in height. The model in figure 9(a) has height fluctuations of up to 0.2 µm, the one in figure 9(b) up to 0.4 µm. Individual cells with random widths between 8 µm and 12 µm were included in the model, finally forming a row of connected cells.

In both cases, fifteen consecutive rows of varying appearance were then included in the z-direction
with random length between 8 and 12 µm, resulting in a model cell layer of around 150 µm in length, as shown in the third column of figure 9. In the model, light was coupled into the model 'device' through a simple rectangular slab-waveguide without roughness (corresponding to the first slice in the top-view) of 2 µm height, in order to model the coupling by an aligned integrated waveguide matching the dimensions of the cell layer. The second and third columns of figure 9 contain a field plot of light of 532 nm wavelength travelling along the structure, calculated by FIMMPROP. The wavelength was chosen because it is where a halogen lamp provides the highest emission intensity. The second column contains the calculated respective modal profiles. The third column shows the light distribution along the cell layer in top-view.

As expected, the results show confinement at the cell-support interface, but considerable penetration into the liquid medium, as the RI difference is smaller there. Comparing rows (a) and (b), it is obvious that the modal profile is adjusting to the shape variations introduced by the height fluctuations. This results also in a difference in transmitted power. For the model with smaller surface roughness, around 45% of the initial power reaches the end-facet, for the model with larger surface roughness, 37%. These results suggest that morphological changes will result in changes of the spectral response as, for different wavelengths, different modes are available and transmittance will be affected differently.

Example of optical characteristics measured using waveguiding within a cell layer and measurement of a photonic fingerprint (PIN) in response to contact with ionomycin and TNF-alpha.

A device substantially as shown in figure 4, with an optical path length between the light emitter and collector through the cell receiving regions of 2.5mm, was set up on a miniaturized optical bench using 3D micropositioning stages to position the fibre optics and the device. A 1x2 multimode fibre optics coupler with core diameter of 62.5 µm positioned at the light input self-alignment channel of the device was used to couple simultaneously a 470nm SLED and a halogen lamp to the light emitter. The collector was coupled using an identical fibre coupler to a QE65000Pro spectrometer (Ocean Optics, Dunedin, FL, USA).

TNF-alpha is known to affect calcium handling and to lower global calcium in vascular smooth muscle cells (VSMC) (Cheranov SY, Jaggar JH., Am J Physiol Cell Physiol. 2006; 290: 964-971). TNF-alpha is therefore expected to affect the morphology and degree of tight binding between the cells in a cell layer and so to cause a change in the optical characteristics of the cell layer in the device. The PIN of a cell layer in the presence of TNF-alpha is therefore expected to differ from that in its absence. TNF-alpha is therefore a model compound for other compounds that may affect cell morphology and therefore the integrity of an epithelial layer. Ionomycin induces holes in the cell membrane, hence elevating intracellular calcium to maximal level (Villaba N. et al., Am J Physiol Heart Circ Physiol. 2007; 292: 1157-1169; Østergaard et al., Am J Physiol Heart Circ Physiol. 2007 Nov; 293(5): 2894-2903), so may be used as a control condition to compare the PIN in different devices.

Primary VSMCs isolated from the left anterior descending coronary artery of pigs were cultured in culture flasks, dissociated by trypsinisation and seeded in the device, the cell receiving surface was coated with a fibronectin layer by adding a solution of 0,1 mg/ml fibronectin and placing it at 4°C for 24h before start of experiment.

The time evolution of the optical characteristics of the layer of primary VSMC cultured inside the device was measured. Spectra were acquired every two hours during 19 hours. At the end of the experiments, the VSMC culture was incubated with ionomycin to restore intracellular calcium, and the final spectra were measured.

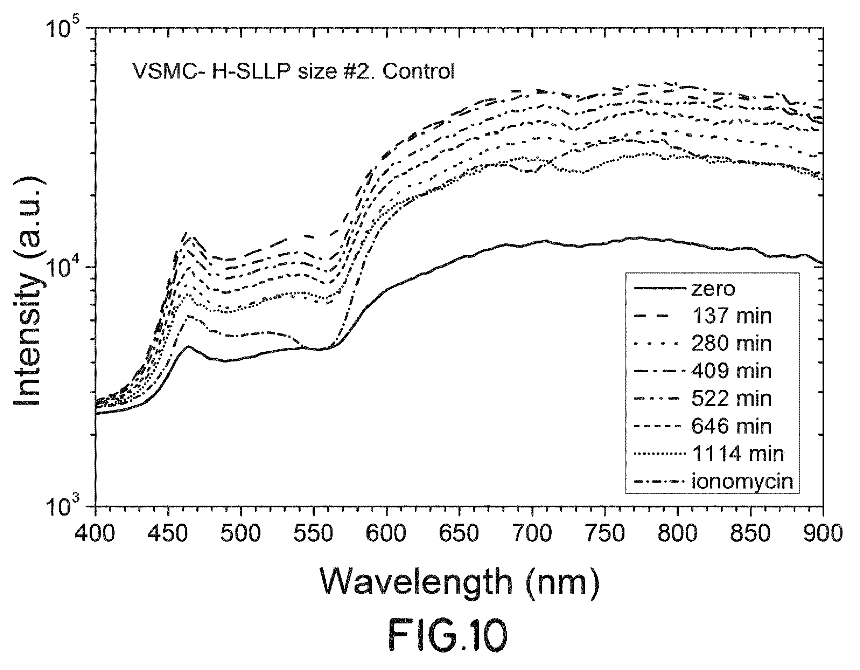

Figure 10 shows the optical characteristics of the layer of VSMCs in the device as a function of time in culture, with ionomycin added at the final time point. As can be seen from figure 10, VSMC have a sharp intensity of the absorbance band centred at 464nm, a secondary, weak band centred at 744nm and a large elbow starting at around 600 nm. From the initial spectral response, the intensity decreases after 2 hours of cell culture, and it remains constant for the following 19 hours (variance in the intensity can be associated to small misalignment in fibre optics positioning). A band at 744nm is apparent. After ionomycin inoculation, the spectrum changes dramatically, with an additional peak located at 561 nm close to the Phenol red band (centred at 552nm), a shift of the 744nm band, now being at 701 nm and the sharpening of the band located at 464nm.

Figure 1 shows the optical characteristics of the layer of VSMCs in the device as a function of time in culture, with 100ng/ml TNF-alpha present in the culture medium throughout, again with ionomycin added at the final time point. After injection of TNF-alpha the characteristic band at 744nm is not measurable, the band at 464nm became much weaker, and a large band centred at 650nm was observed. After ionomycin inoculation, the spectrum changed again. The band at 464nm was fully recovered, the 650nm band showed a significant increase in intensity, with 2-3 sub-bands (the most significant being centred at 681 nm), and a dramatic decrease of the intensity was seen for wavelength values higher than 725nm.

These results show that the effects of addition of a compound to the culture media above the cell layer was measurable using the embodiment of the device as shown in figures 4a and 4b.

### Second example

Modelling of light propagation in macrophages in a device according to the invention.

Macrophages are critical components of atherosclerotic plaques which play key roles in the initiation, progression and clinical manifestations of atherosclerotic disease. Isolation and culture of primary macrophages has become a gold standard in atherosclerosis research. Culture of naïve macrophages and their subsequent exposure to pro-inflammatory cytokines (e.g. TNFα) is commonly used in mechanistic studies of atherosclerosis. Likewise, polarization towards different macrophage phenotypes (anti- versus pro-inflammatory macrophages) is a useful tool for better understanding the pathogenesis and diagnosis of atherosclerosis.

In this second example, bone-marrow derived macrophages were cultured in the chamber of the device for a period of 36h and a first PIN was taken. Then, IL-4 was injected into the device and a second PIN was acquired after 12 h of incubation.

The device used, with an optical path length between the light emitter and light collector through the cell receiving regions of 2.5mm, was set up on a miniaturized optical bench using 3D micropositioning stages to position the fibre optics and the device. A 1x2 multimode fibre optics coupler with core diameter of 62.5 µm positioned at the light input self-alignment channel of the device was used to couple simultaneously a 365nm SLED and a halogen lamp to the light emitter. The collector was coupled using an identical fibre coupler to a QE65000Pro spectrometer (Ocean Optics, Dunedin, FL, USA).

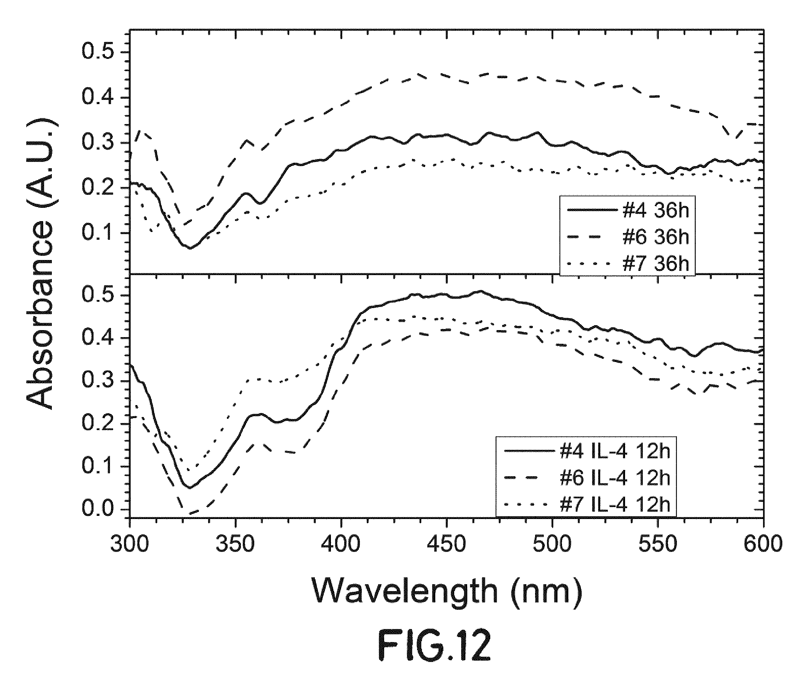

Results are shown in Figure 12, where the most representative information can be found at shorter wavelengths (i.e. below 405 nm). Finally, after 36 h, they are considered as the final PIN, since cell confluence did not increase with time and remained around 70%. After injecting IL-4 and incubating the cells for an additional 12 hours, a different PIN was acquired, with a sharp band appearing at 375 nm. For better comparison, the PINs of three BDTs are presented after 36 h (top) and after an additional 12 h after IL-4 injection (bottom). Even though a peak can be seen at 325 nm in BDT #7, this was not obtained in the other two BDTs, overall the results were highly consistent.

The invention has been described by way of examples only and it will be appreciated that variation may be made to the above-mentioned embodiments without departing from the scope of invention.

With respect to the above description then, it is to be realised that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention as set out in the accompanying claims.

## Claims

1. A device (10, 50, 100, 200, 300, 400, 410, 500) to measure an optical characteristic of a plurality of cells (22) on a surface, comprising:
a chamber (12) having a wall comprising a low refractive index (RI) material (16) with RI in the range 1.01 to 1.345, the wall (12) having a surface comprising a cell receiving region (20) overlying the low RI material (16), the cell receiving region (20) comprising a cell receiving surface (34) adapted to permit adhesion of the plurality of cells (22),
a light emitter (24) at a first position (26) adjacent to the cell receiving region (20), and
a light collector (28) at a second position (30) adjacent to the cell receiving region (20) such that the cell receiving region (20) lies between the first and second positions (26, 30), the light collector (28) being configured to receive light travelling in a direction substantially parallel to the said surface (34).

2. The device (10, 50, 100, 200, 300, 400, 410, 500) according to claim 1 wherein the light emitter (24) is configured to couple light into the said plurality of cells (22) and the light collector (28) is configured to receive light that is guided within the plurality of cells (22) in part of the optical path from the light emitter (24) to the light collector (28) in use.

3. The device (10, 50, 100, 200, 300, 400, 410, 500) according to claim 1 wherein the RI of the low RI material (16) is 1.304 to 1.334.

4. The device (10, 50, 100, 200, 300, 400, 410, 500) according to any of claims 1 to 3 wherein the light collector (28) comprises an optical cross-section (32) through which light passes from the chamber (12) into the light collector (24), the optical cross-section (32) being positioned relative to the cell receiving surface (34) of the cell receiving region (20) such that the projection of the said surface (34) in the direction of the light collector (24) intersects the optical cross-section (32) of the light collector ,and/or the light emitter (24) comprises an optical cross-section (52) through which light passes into the chamber (12) and wherein the optical cross-section (52) is positioned relative to the cell receiving surface (34) of the cell receiving region (20) such that the projection of the said surface towards the light emitter (24) intersects the optical cross-section (52) of the light emitter.

5. The device (10, 50, 100, 200, 300, 400, 410, 500) according to any preceding claim wherein the low RI material (16) is selected from nanoporous silica, a nanoporous metal oxide, a porous polymer such as porous PDMS.

6. The device (10, 50, 100, 200, 300, 400, 410, 500) according to any preceding claim wherein the cell receiving surface (34) comprises a layer or coating of a material to permit cell adhesion, overlying the low RI material (16), wherein the surface layer has a thickness in the range 0.3nm to 100nm.

7. The device (10, 50, 100, 200, 300, 400, 410, 500) according to any preceding claim wherein a dimension of the cell receiving region (20) perpendicular to the light pathway from the light emitter (24) to the light collector (28) increases along the pathway from the light emitter (24).

8. The device (10, 50, 100, 200, 300, 400, 410, 500) according to any preceding claim wherein the optical pathway from the light emitter (24) to the light collector (28) through the chamber (12) is curved.

9. An apparatus comprising a device (10, 50, 100, 200, 300, 400, 410, 500) according to any preceding claim configured to measure the response of cells in the device (10, 50, 100, 200, 300, 400, 410, 500) to a compound in liquid contacting the cells, the device (10, 50, 100, 200, 300, 400, 410, 500) being configured to measure a baseline optical characteristic of the cells without the compound present, to measure a test optical characteristic of the cells with the compound present, and to compare the test optical characteristic with the baseline optical characteristic to derive cell response data.

10. A method of measuring an optical characteristic of a plurality of cells comprising:
providing a plurality of cells arranged as a layer on a surface comprising a low RI material, the RI being in the range around 1.01 to around 1.345,
providing a liquid medium in contact with the cells,
coupling light from a light emitter into the cell layer at a first position,
collecting light travelling from the light emitter, and guided within the layer of cells, at a light collector at a second position, and
measuring a characteristic of the light received by the light collector, wherein light is guided within the layer of cells in part of the said optical path.

11. The method according to claim 10 wherein the optical characteristic is selected from the group consisting of: absorbance at one or more frequencies such as an absorption spectrum; polarisation; a fluorescence at one or more frequencies such as a fluorescence spectrum; scattering at one or more frequencies or a combination of these.

12. The method according to any of claims 10 to 11 of measuring a physiological characteristic of a population of cells comprising:
measuring an optical characteristic of the population of cells,
comparing the optical characteristic with a reference characteristic indicative of the physiological characteristic, and
using the comparison to determine the physiological characteristic of the cells.

13. The method according to any of claims 10 to 12 of measuring the response of cells in the device to a compound in a liquid contacting the cells comprising (a) measuring a baseline optical characteristic of the cells without the compound present, (b) adding a compound to a liquid medium contacting the cells and measuring an optical characteristic of the cells, (c) comparing the measured optical characteristic in the presence of the compound with the baseline optical characteristic to determine a change in a physiological characteristic of the cells in response to the compound.

14. The method according to claims 12 or claim 13 wherein the physiological characteristic is a characteristic typically measured as part of a test selected from: a toxicology test on the compound, a diagnostic test on a sample drawn from a patient, on which the compound is tested, a test for a drug effect of the compound on the cells.

15. An in vitro method of diagnosing and/or prognosis of a medical condition of a sample comprising a plurality of cells obtained from a patient comprising:
measuring the optical characteristic of the plurality of cells according to the method of claim 10,
comparing the optical characteristic of the said plurality of cells with calibration data, and
identifying said patient as having a medical condition when the optical characteristics are significantly different from the optical characteristics of the calibration data.
